# EUROPÄISCHE PATENTSCHRIFT

(11) **EP 4 381 160 B1**
(45) Veröffentlichungstag und Bekanntmachung des Hinweises auf die Patenterteilung: **07.05.2025**
(21) Anmeldenummer: 23710734.7
(22) Anmeldetag: 09.03.2023
(51) Int. Cl.: C08J 9/10, E06B 3/62, C08L 23/16, C08J 9/32, E06B 7/23

(54) **HOCH WÄRMEDÄMMENDE PROFILDICHTUNG**
HIGHLY THERMALLY INSULATING SEALING STRIP
BANDE D'ÉTANCHÉITÉ À ISOLATION THERMIQUE ÉLEVÉE

(30) Priorität: 27.04.2022 DE 102022110261; 02.08.2022 DE 102022119349
(43) Veröffentlichungstag der Anmeldung: 12.06.2024
(73) Patentinhaber: Semperit AG Holding, 1100 Wien (AT)
(72) Erfinder: SUPPLIT, Ralf, 2700 Wiener Neustadt (AT); FLOCKERZI, Uwe, 66976 Rodalben (DE); SCHWAIBERGER, Gerhard, 94560 Offenberg (DE)
(74) Vertreter: Müller Schupfner & Partner Patent- und Rechtsanwaltspartnerschaft mbB (Muc)
(86) Internationale Anmeldenummer: PCT/EP2023/056043
(87) Internationale Veröffentlichungsnummer: WO 2023/208461

(56) Entgegenhaltungen:
- EP-A1- 3 879 062
- WO-A1-2020/150119
- JP-A- H0 812 797

## Beschreibung

Die vorliegende Erfindung betrifft eine hoch wärmedämmende Profildichtung aus einer Elastomerzusammensetzung, ein Verfahren zu deren Herstellung und die Verwendung der Profildichtung zur Wärmedämmung.

Profildichtungen für die Wärmedämmung von Fenstern und Türen sind bereits bekannt. Bislang kommen vor allem Elastomer-Werkstoffe wie beispielsweise thermoplastische Elastomere (TPE), Silikon-Kautschuke, Ethylen-Propylen-Dien-Kautschuke (EPDM), Chloropren-Kautschuk (CR) und Polyvinylchlorid (PVC) zum Einsatz.

Entscheidend für die Qualität einer Wärmedämmung ist der Wärmedurchgangskoeffizient (U_{w}-Wert). Der Wärmedurchgangskoeffizient U_{w} ist die Wärmemenge, welche pro Zeiteinheit (üblicherweise 1 Sekunde) durch 1 m² eines Bauteils (beispielsweise Mauer, Beton, Dach) bei einem Temperaturunterschied von 1 Kelvin (K) hindurchgeht. Der U_{w}-Wert stellt somit eine Maßeinheit für den Wärmeverlust dar. Je geringer der U_{w}-Wert ist, desto geringer ist der Wärmeverlust und desto besser ist die Wärmedämmeigenschaft eines Bauteils. Für eine gute Wärmedämmung und gute Isoliereigenschaften ist somit ein möglichst kleiner U_{w}-Wert erwünscht.

Bei der Berechnung des U_{w}-Wertes für ein Fenster oder eine Tür muss berücksichtigt werden, dass das Fenster oder die Tür aus mehreren Bestandteilen, insbesondere aus einer Verglasung und einem Rahmen, besteht.

Der U_{w}-Wert des Fensters oder der Tür ergibt sich aus den jeweiligen U_{w}-Werten der einzelnen Bestandteile unter Berücksichtigung der jeweiligen Flächenanteile, die diese einnehmen.

Nach der EnEV 2009 darf bei normaler Verglasung der U_{w}-Wert 1,3 Watt pro Quadratmeter und Kelvin (W/(m²·K)) nicht überschreiten. Fenster mit einem U_{w}-Wert von 0,9 W/(m²·K) gelten als Fenster mit effizienter Wärmedämmung. Als passivhaustauglich werden Fenster mit einem U_{w}-Wert von 0,8 W/(m²·K) oder kleiner angesehen.

Um mittels einer hoch wärmedämmenden Profildichtung eine gute Wärmedämmung eines Fensters oder einer Tür zu erreichen, sollte die Profildichtung aus einem Material mit niedriger Wärmeleitfähigkeit λ gefertigt sein. Die Wärmeleitfähigkeit λ entspricht dem Wärmefluss, welcher ein Objekt mit einer Oberfläche von 1 m² und einer Dicke von 1 m, bei einer Temperaturdifferenz von 1 K pro Sekunde passiert. Derzeit wird laut DIN EN 10077 für U_{w}-Wert Berechnungen für Profildichtungen eine Wärmeleitfähigkeit λ = 0,05 Watt pro Meter und Kelvin (W/(m·K)) angenommen. Jedoch wird diese Wärmeleitfähigkeit von 0,05 W/(m·K) bisher nur von Materialien mit einer Dichte von 0.06-0.08 g/cm³ erreicht. Diese Materialien haben jedoch eine niedrige Stauchhärte von meist unter 300 kPa bei 50 % Kompression (d.h. Stauchung), was deren Anwendung im Baubereich limitiert. Die handelsüblichen Baustoffe für Profildichtungen weisen eine höhere Dichte und eine höhere Wärmeleitfähigkeit auf. Beispielsweise beträgt die Wärmeleitfähigkeit von PVC 0,14-0,17 W/(m·K) bei einer Dichte von etwa 1,20-1,40 g/cm³ und von Silikonen etwa 0,2-0,3 W/(m·K) bei einer Dichte von etwa 0,76-1,07 g/cm³ bzw. 0,05 W/(m·K) bei einer Dichte von 0,2 g/cm³.

Aus dem Stand der Technik ist die Verwendung von Mikrohohlkugeln zur Verringerung der Dichte von Materialien für Dichtungen bekannt. JP H08 12797 A insbesondere eine Profildichtung aus einer Elastomerzusammensetzung beschreibe, umfassend:100 phr Elastomer (A) und 0,1-20 phr expandierte Mikrokugeln (B), wobei der mittlere Durchmesser der expandierten Mikrokugeln 10-200 µm beträgt und die Elastomerzusammensetzung (1) eine Dichte von 0,10-0,30 g/ cm3 aufweist.

Aus der US 2013/0072584 A1 sind Dichtungsleisten für Kraftfahrzeuge, umfassend ein Hauptkörperelement aus einem Material hoher Dichte und einen Schwammkörper aus einem komprimierbaren Material, bekannt, wobei der Schwammkörper Gummi und expandierbare Mikrokugeln als physikalisches Blähmittel enthält.

Es ist jedoch bislang keine Profildichtung aus einem Material bekannt, welches die in der DIN EN 10077 angenommene Wärmeleitfähigkeit λ = 0,05 W/(m·K) erreicht und zugleich ein elastisches Verhalten und eine hohe Steifigkeit bei geringer Dichte aufweist.

Daher ist es Aufgabe der vorliegenden Erfindung, eine Profildichtung mit verbesserten Wärmedämmeigenschaften, insbesondere mit einer Wärmeleitfähigkeit λ < 0,060 W/(m·K), bereitzustellen, welche sich für eine Dauerfunktion eignet und eine hohe Elastizität, ein gutes Rückstellvermögen sowie eine hohe Steifigkeit bei geringer Dichte aufweist.

Diese Aufgabe wird durch eine Profildichtung gemäß Anspruch 1 gelöst.

Eine erfindungsgemäße Profildichtung, insbesondere für Fenster und Türen, umfasst eine Elastomerzusammensetzung, enthaltend
100 phr Elastomer und
25-40 phr expandierte Mikrokugeln,
wobei der mittlere Durchmesser der expandierten Mikrokugeln 10-200 µm beträgt und die Elastomerzusammensetzung eine Dichte von 0,10-0,30 g/cm³ aufweist.

Der hohe Anteil von 25-40 phr expandierten Mikrokugeln mit einem mittleren Durchmesser der expandierten Mikrokugeln von 10-200 µm sorgt für eine geringe Dichte und eine geringe Wärmeleitfähigkeit der Elastomerzusammensetzung und überraschenderweise gleichzeitig für eine hohe Steifigkeit des Materials sowie eine hohe Elastizität und ein gutes Rückstellvermögen des Materials. Dies war bislang nicht erreichbar, insbesondere nicht mit chemischen Treibmitteln.

Die Aufgabe wird weiter gelöst durch ein Verfahren zur Herstellung einer Profildichtung gemäß Anspruch 14.

Ein Verfahren zur Herstellung einer Profildichtung umfasst die Schritte, dass eine Werkstoffmischung, umfassend 100 phr Elastomer und 25-40 phr expandierbare Mikrokugeln, auf eine Temperatur von 75 - 300 °C erhitzt und eine Profildichtung geformt wird. Beim Erhitzen expandieren die expandierbaren Mikrokugeln und bilden expandierte Mikrokugeln. Die "Werkstoffmischung" bezeichnet das Ausgangsmaterial, das erhitzt wird und expandierbare Mikrokugeln enthält, und die "Elastomerzusammensetzung" das nach dem Erhitzen erhältliche Material, das expandierte Mikrokugeln enthält.

Die Profildichtung für Fenster und Türen kann insbesondere eine Profildichtung für Gebäude-Fenster, Gebäude-Türen und Gebäude-Tore sein, d. h. als Gebäude-(Fenster-/Tür-/Tor-)Profildichtung ausgebildet sein.

Weitere Vorteile und Merkmale ergeben sich aus den jeweiligen Unteransprüchen, sowie aus der Beschreibung und den Figuren.

Erfindungsgemäß umfasst die Profildichtung ein Elastomer, um eine hohe Elastizität zu erreichen, sowie expandierte Mikrokugeln, welche eine hohe Steifigkeit und niedrige Dichte, sowie eine niedrige Wärmeleitfähigkeit ermöglichen.

Eine Dichtung kann ein Element oder eine Konstruktion sein, welche(s) dazu ausgelegt ist, einen ungewollten Stoff- oder Wärmeübergang von einem Ort zu einem anderen Ort zu verhindern oder zu begrenzen.

Die Profildichtung kann eine Dichtung in Form eines Profilkörpers sein, welcher sich in eine Längsrichtung bzw. Profilrichtung erstreckt und dessen Querschnitt eine gewisse geometrische Form aufweist. Bevorzugt ändert sich die geometrische Form des Querschnitts über die Längsrichtung bzw. Profilrichtung nicht, sodass die Querschnittsflächen des Profilkörpers in Längsrichtung an jeder Position deckungsgleich sind.

Die Profildichtung kann als eine Mitteldichtung, Seitendichtung und/oder als Dämmstreifen ausgebildet sein.

Die Profildichtung kann durch Extrusion, Kalandrieren oder Pressung hergestellt werden. Extrusion ist ein Verfahren, bei welchem ein plastisch verformbares, dickflüssiges Material unter Druck kontinuierlich aus einer formgebenden Öffnung gepresst wird. Die formgebende Öffnung kann eine Matrize, eine Düse oder ein Mundstück sein. Die geformte Masse kann nach dem Austritt aus der formgebenden Öffnung durch Abkühlung aushärten. Vorteil der Extrusion ist, dass damit Profilkörper mit komplexen Querschnittsformen in nahezu beliebiger Länge hergestellt werden können. Kalandrieren ist ein Verfahren, bei welchem ein Material durch ein System aus mehreren übereinander angeordneten Walzen hindurchgeführt wird. Pressung ist ein Verfahren, bei welchem ein Material zwischen zwei Festkörpern, bevorzugt Platten, eingebracht wird und die beiden Festkörper aufeinander zubewegt werden, sodass eine Kraft auf das Material zwischen den beiden Festkörpern ausgeübt wird.

Gemäß einem weiteren Aspekt der Erfindung weist die Elastomerzusammensetzung, aus der die Profildichtung gebildet ist, eine Dichte von 0,10-0,30 g/cm³, bevorzugt von 0,12-0,28 g/cm³ und am meisten bevorzugt von 0,17-0,26 g/cm³ auf. Mit diesen Dichten lassen sich besonders niedrige Wärmeleitfähigkeiten des Materials erreichen.

Die erfindungsgemäße Elastomerzusammensetzung umfasst 25-40 phr, bevorzugt 25-38 phr expandierte Mikrokugeln. Mit diesen Anteilen an expandierte Mikrokugeln lässt sich überraschenderweise eine besonders geringe Wärmeleitfähigkeit der Elastomerzusammensetzung bei gleichzeitig hoher Steifigkeit des Materials, einer hohen Elastizität und einem guten Rückstellvermögen des Materials erreichen.

In einer bevorzugten Ausführungsform der Erfindung umfasst die Elastomerzusammensetzung zusätzlich
10-150 phr Weichmacher
20-400 phr Füllstoff
0-100 phr chemisches Treibmittel
1-50 phr Hilfsstoff und
0-30 phr Trocknungsmittel sowie optional
1-30 phr, bevorzugt 3-12 phr, besonders bevorzugt 5-10 phr Vernetzer.

Erfindungsgemäß umfasst die Werkstoffmischung zur Herstellung der erfindungsgemäßen Profildichtung aus einer Elastomerzusammensetzung:
- 100 phr Elastomer
- 0-300 phr, bevorzugt 10-150 phr, besonders bevorzugt 20-100 phr, Weichmacher
- 0-600 phr, bevorzugt 20-400 phr, besonders bevorzugt 50-180 phr, Füllstoff
- 0-30 phr, bevorzugt 1-30 phr, weiter bevorzugt 3-12 phr, besonders bevorzugt 5-10 phr, Vernetzer
- 25-40 phr, bevorzugt 25-38 phr expandierbare Mikrokugeln
- 0-100 phr, bevorzugt 1-15 phr, besonders bevorzugt 5-10 phr, chemisches Treibmittel
- 0-100 phr, bevorzugt 1-50 phr, besonders bevorzugt 1-10 phr, Hilfsstoff
- 0-30 phr, bevorzugt 1-20 phr, besonders bevorzugt 2-10 phr, Trocknungsmittel.

Die Herstellung der erfindungsgemäßen Profildichtung aus einer Elastomerzusammensetzung erfolgt durch Erhitzen der Werkstoffmischung auf eine Temperatur von 75-300 °C, bevorzugt 200-280 °C, bevorzugter 210-270 °C und Formen einer Profildichtung, beispielsweise durch Extrudieren, Kalandrieren oder Pressen. Beim Erhitzen erfolgt die Expansion der expandierbaren Mikrokugeln zu expandierten Mikrokugeln. Wenn Vernetzer in der Werkstoffmischung enthalten ist, kann ferner eine Vernetzung des Elastomers stattfinden.

Die Profildichtung, insbesondere für Fenster- und Türen, ist erfindungsgemäß aus einer Elastomerzusammensetzung, umfassend:
- 100 phr Elastomer
- 0-300 phr, bevorzugt 10-150 phr, besonders bevorzugt 20-100 phr, Weichmacher
- 0-600 phr, bevorzugt 20-400 phr, besonders bevorzugt 50-180 phr, Füllstoff
- 25-40 phr, bevorzugt 25-38 phr expandierte Mikrokugeln
- 0-100 phr, bevorzugt 1-15 phr, besonders bevorzugt 5-10 phr, chemisches Treibmittel
- 0-100 phr, bevorzugt 1-50 phr, besonders bevorzugt 1-10 phr, Hilfsstoff
- 0-30 phr, bevorzugt 1-20 phr, besonders bevorzugt 2-10 phr, Trocknungsmittel.

Vorzugsweise enthält die Elastomerzusammensetzung 1-30 phr, weiter bevorzugt 3-12 phr, besonders bevorzugt 5-10 phr, Vernetzer.

Unter phr (parts per hundred rubber) wird wie üblich der Massenanteil der einzelnen Komponenten einer elastomeren Zusammensetzung bezeichnet, wobei die Angaben jeweils auf 100 Massenteile des Elastomers bezogen sind.

Die Angabe phr kann in dem Fachmann bekannter Weise auch in Gewichtsprozent umgerechnet werden. Dazu werden die Massen der einzelnen Komponenten durch die Gesamtmasse der Zusammensetzung dividiert. Eine Zusammensetzung mit beispielsweise 100 phr Elastomer, 10 phr Weichmacher und 10 phr expandierbaren Mikrokugeln entspräche einer Zusammensetzung mit 83,3 Gew.-% Elastomer, 8,3 Gew.-% Weichmacher und 8,3 Gew.-% expandierbaren Mikrokugeln.

Das Elastomer kann ein Elastomer oder ein Elastomerverschnitt (Elastomermischung) sein. Bevorzugt handelt es sich bei dem Elastomer in dieser Werkstoffmischung oder Elastomerzusammensetzung um EPM (Ethylen-Propylen Copolymer), EPDM (Ethylen-Propylen-Dien Kautschuk) oder Verschnitte (Mischungen) aus EPDM und BR (Butadien-rubber, d.h. Polybutadien). Das Elastomer bewirkt eine hohe Elastizität und eine hohe Witterungsbeständigkeit der Profildichtung.

Die Werkstoffmischung zur Herstellung der Profildichtung umfasst in einer bevorzugten Ausführungsform neben dem Elastomer auch Vernetzer, zum Beispiel 1-30 phr Vernetzer. Der Vernetzer regiert beim Erhitzen/Vulkanisieren mit dem Elastomer und bildet so ein Elastomer, das stärker vernetzt ist. Dabei wird der Vernetzer in das Elastomer eingebaut und ist so Teil des Elastomers der Elastomerzusammensetzung, die die Profildichtung bildet. Daher ist der Vernetzer in der erfindungsgemäßen Elastomerzusammensetzung nicht als separate Komponente aufgeführt.

Wenn man das Elastomer und den Vernetzer auch in reagierter Form als separate Komponenten betrachtet, wäre die erfindungsgemäße Profildichtung wie folgt zusammengesetzt. Profildichtung, insbesondere für Fenster und Türen, vorzugsweise aus einer Elastomerzusammensetzung, umfassend:
100 phr Elastomer,
25-40 phr expandierte Mikrokugeln, und
1-30 phr, bevorzugt 3-12 phr, besonders bevorzugt 5-10 phr, eines Vernetzers,
wobei der mittlere Durchmesser der expandierten Mikrokugeln 10-200 µm beträgt und die Elastomerzusammensetzung eine Dichte von 0,10-0,30 g/cm³ aufweist.

Der Weichmacher kann ein Öl, insbesondere ein Mineralöl, ein pflanzliches Öl und/oder ein Polymer umfassen. Das Polymer kann ein Polyisobutylen umfassen. Der Weichmacher ermöglicht eine Optimierung der Viskosität der Elastomerzusammensetzung und eine Einstellung der Härte der Profildichtung. Es können mehrere verschiedene Weichmacher in einer Elastomerzusammensetzung verwendet werden.

Der Füllstoff kann ein Stoff sein, welcher der Elastomerzusammensetzung zur Optimierung der Eigenschaften zugegeben werden kann. Als Füllstoff kann beispielsweise Ruß, Kaolin, Kreide oder Silica verwendet werden. Ferner können auch polymere Füllstoffe verwendet werden. Polymere Füllstoffe können Polypropylen und/oder Polyethylen umfassen. Als flammhemmende Füllstoffe können Aluminiumhydroxid, Magnesiumhydroxid und/oder Antimontrioxid verwendet werden. Ferner können Leichtfüllstoffe, die poröse Materialien wie beispielsweise Perlit umfassen, eingesetzt werden. Beispielsweise können Aeropor 180 (Hohlkugeln auf Aluminium-Silikat-Basis), Sil-cel (expandiertes Perlit) und/oder Cenospheres (Hohlkugeln auf Aluminium-Silikat-Basis) und/oder leichtgewichtige Kugeln ("light bubbles", z. B. Borosilikatglas-Kugeln) eingesetzt werden. Es können mehrere Füllstoffe in einer Werkstoffmischung oder Elastomerzusammensetzung verwendet werden. Füllstoffe haben den Vorteil, die Extrudierbarkeit der Werkstoffmischung bzw. Elastomerzusammensetzung zu erhöhen. Ferner können Füllstoffe die mechanischen Eigenschaften der Profildichtung verbessern. Insbesondere können Füllstoffe die Steifigkeit der Profildichtung erhöhen und die Wärmeleitfähigkeit erhalten oder senken.

Der Vernetzer kann eine Substanz oder eine Mischung von Substanzen sein, welche eine vollständige oder teilweise Vernetzung der Polymerketten des Elastomers oder Elastomerverschnitts bewirkt. Der Vernetzer kann insbesondere ein Vernetzersystem sein, umfassend Schwefel und/oder Peroxid, Beschleuniger und/oder Aktivatoren, und/oder ein Harzsystem. Ein Peroxid kann bevorzugt eine organische Peroxidverbindung oder eine Mischung an organischen Peroxidverbindungen sein. Peroxide haben den Vorteil, den Vernetzungsgrad der Polymerketten und die Steifigkeit der Profildichtung erhöhen. Der Aktivator kann eine Substanz sein, welche die zu vernetzenden Polymerketten und/oder den Vernetzer aktiviert. Der Aktivator kann Stearinsäure oder Zinkoxid sein. Der Aktivator hat den Vorteil, eine effiziente Vernetzung von Polymerketten zu ermöglichen. Der Beschleuniger kann eine oder eine Mischung aus mehreren Substanzen sein, die die Vernetzungsrate (Geschwindigkeit der Vernetzung) erhöhen. Der Beschleuniger kann 2-Mercaptobenzothiazol (MBT) und/oder Tetramethylthiuramdisulfid (TMTD) sein. Der Beschleuniger hat den Vorteil, den Vernetzungsgrad der Polymerketten zu erhöhen und die Steifigkeit der Profildichtung zu erhöhen. In einer Werkstoffmischung können mehrere verschiedene Vernetzer, Vernetzungssysteme, Aktivatoren und/oder Beschleuniger eingesetzt werden. Vernetzer, Vernetzungssysteme, Aktivatoren und/oder Beschleuniger haben den Vorteil, die Steifigkeit der Profildichtung zu erhöhen. Durch Wahl eines optimalen Verhältnisses an Vernetzer, Vernetzungssystem, Aktivatoren und/oder Beschleunigern kann ein optimaler Vernetzungsgrad der Polymerketten, eine hohe Steifigkeit und hohe Elastizität der Profildichtung und ein optimales Treibverhalten der chemischen und physikalischen Treibmittel erreicht werden.

Unter expandierbaren Mikrokugeln werden im Sinne der Erfindung mikroskopische Kugeln verstanden, d. h. im Wesentlichen kugelförmige Körper mit einem mittleren Durchmesser im Mikrometerbereich, insbesondere mit einem mittleren Durchmesser von 1-100 µm, bevorzugt 5-50 µm, besonders bevorzugt 6-40 µm, die eine Hülle aus thermoplastischem Material aufweisen und innerhalb der Hülle eine flüchtige organische Verbindung aufweisen, die als Treibmittel fungieren kann.

Die flüchtige organische Verbindung ist vorzugsweise eine organische Verbindung, bevorzugt ein Kohlenwasserstoff, mit einem Siedepunkt < 120°C, weiter bevorzugt < 100°C, noch weiter bevorzugt < 60°C, am meisten bevorzugt < 40°C. Der Siedepunkt ist vorzugsweise unter der sogenannten Treibtemperatur. Die Treibtemperatur ist eine Temperatur, die hoch genug ist, um die thermoplastische Hülle zu erweichen und den Dampfdruck des Treibmittels zu erhöhen, sodass die Mikrokugeln expandieren. Die Expansion führt zu einer Volumenvergrößerung um mindestens das Zweifache, bevorzugt um das Zwanzig- bis Achtzigfache.

Nach dem Expandieren bezeichnet man die expandierbaren Mikrokugeln als expandierte Mikrokugeln. Die Werkstoffmischung enthält daher expandierbare Mikrokugeln und die daraus hergestellte Elastomerzusammensetzung expandierte Mikrokugeln. Unter expandierten Mikrokugeln werden somit im Sinne der Erfindung vorzugsweise Mikrokugeln verstanden mit einer Hülle, bevorzugt einer geschlossenen Hülle, aus thermoplastischen Material, wobei sich im Innern der Hülle eine organische Verbindung befindet. Die organische Verbindung hat bevorzugt einen Siedepunkt < 120°C, weiter bevorzugt < 100°C, noch weiter bevorzugt < 60°C, am meisten bevorzugt < 40°C. Die organische Verbindung ist bevorzugt ein Kohlenwasserstoff, zum Beispiel Isopentan.

Das thermoplastische Material, insbesondere ein thermoplastischer Kunststoff, ist vorzugsweise ein Polymer auf der Basis von Poylacrylnitril, Polystyrol und/oder PVC. Die expandierbaren Mikrokugeln weisen bevorzugt eine Treibtemperatur von 25 °C bis 300 °C, bevorzugt von 100 °C bis 290 °C, am meisten bevorzugt 200 °C bis 280 °C auf. Expandierbare Mikrokugeln mit einer Treibtemperatur von 25 bis 300 °C ermöglichen eine Expansion der Mikrokugeln beim Erhitzen der Werkstoffmischung. Die flüchtigen Kohlenwasserstoffverbindungen wirken als Treibmittel und bewirken eine besonders effektive Expansion der Mikrohohlkugeln.

Unter Wärmeeinwirkung kann die thermoplastische Hülle erweichen. Bei Erreichen des Siedepunkts der Kohlenwasserstoffverbindung erfolgt eine Verdampfung, wodurch das Volumen, das die Kohlenwasserstoffverbindung einnimmt, zunimmt und ein Ausdehnen der Mikrokugeln bewirkt. Der mittlere Durchmesser der expandierbaren Mikrokugeln beträgt 1-100 µm, bevorzugt 5-50 µm, besonders bevorzugt 6-40 µm. Nach der Wärmeeinwirkung und dem Expandieren der expandierbaren Mikrokugel liegt eine expandierte Mikrokugel oder Mikrohohlkugel vor. Die expandierten Mikrokugeln oder Mikrohohlkugeln haben einen mittleren Durchmesser von 10-200 µm, bevorzugt 30-170 µm, weiter bevorzugt 40-150 µm, am meisten bevorzugt 50-130 µm.

Der mittlere Durchmesser der expandierten Mikrokugeln wird ermittelt, indem in einem Schnitt durch die Elastomerzusammensetzung unter dem Mikroskop (z.B. einem Lichtmikroskop) der Durchmesser von mindestens 20 expandierten Mikrokugeln ausgemessen und der arithmetische Mittelwert bestimmt wird. Bei nicht ganz kugelförmigen Mikrokugeln wird dabei zufällig ein Durchmesser ausgewählt. Bei dieser Messung der Durchmesser der expandierten Mikrokugeln in einem Schnitt durch die Elastomerzusammensetzung werden nicht die tatsächlichen Durchmesser ermittelt, sondern die Durchmesser in einem (zufälligen) Schnitt und diese Durchmesser sind geringer als die tatsächlichen Durchmesser, weil ein zufälliger Schnitt überwiegend nicht durch den Mittelpunkt der Kugeln geht. Die mit der oben beschriebenen Messmethode in einem Schnitt ermittelten mittleren Durchmesser ergeben aber die angegebenen Bereiche der mittleren Durchmesser der expandierten Mikrokugeln.

Der mittlere Durchmesser der expandierbaren Mikrokugeln, d.h. der Mikrokugeln vor dem Schritt des Expandierens ist bei kommerziell erhältlichen Produkten in der Regel angegeben. Er kann ermittelt werden, indem der Durchmesser von mindestens 20 expandierbaren Mikrokugeln ausgemessen wird, beispielsweise unter dem Mikroskop, und der arithmetische Mittelwert bestimmt wird.

Die durchschnittliche Dicke der Hülle der expandierbaren Mikrokugeln ist bevorzugt 1 - 3 µm, besonders bevorzugt 1,5 - 2,5 µm. Die durchschnittliche Dicke der Hülle der expandierten Mikrokugeln ist bevorzugt 0,02 - 0,5 µm, besonders bevorzugt 0,05 - 0,3 µm, am meisten bevorzugt 0,08 - 0,2 µm.

Die expandierten Mikrokugeln oder Mikrohohlkugeln haben den Vorteil, dass damit in der erfindungsgemäßen Elastomerzusammensetzung, die die Profildichtung bildet, eine niedrige Dichte der Elastomerzusammensetzung bzw. des Materials der Profildichtung erreicht werden kann und gleichzeitig noch eine hohe Steifigkeit des Materials vorliegt.

Als expandierbare Mikrokugeln können zum Beispiel Expancel^{®} Mikrosphären, beispielsweise Expancel 930 DU 120 verwendet werden. Die expandierbaren Mikrokugeln können eine Polymerhülle, welche PAN (Polyacrylnitril) umfasst, aufweisen. Beispielweise kann die Polymerhülle aus Polystyrol und PAN (als Copolymer) bestehen. Die Treibtemperatur hängt von der Erweichungstemperatur der Polymerhülle ab. Für Expancel^{®} Mikrosphären kann als organisches Lösungsmittel Isopentan (Siedepunkt 28 °C) verwendet werden. Die Expancel^{®} Mikrosphären haben im expandierten Zustand in der Regel einen Durchmesser von etwa 120 µm. Die expandierbaren Mikrokugeln dienen als physikalisches Blähmittel, welches zur Porenbildung und Senkung der Dichte eingesetzt wird. Die Größe der dabei entstehenden Poren entspricht in etwa der Größe der expandierten Mikrokugeln, weshalb der Porendurchmesser ≤200 µm, bevorzugt <150 µm und bevorzugter <130 µm beträgt, insbesondere beträgt der mittlere Durchmesser der Poren 10-200 µm, bevorzugt 30-170 µm, weiter bevorzugt 40-150 µm, am meisten bevorzugt 50-130 µm.

Der zusätzliche Vorteil von expandierten Mikrokugeln bzw. physikalischen Blähmitteln ist, dass kleinere Porendurchmesser und somit eine feinere Porenstruktur erreicht werden können als mit chemischen Treibmitteln. Ferner kann durch die Verwendung von expandierbaren Mikrokugeln einfach und genau die Porengröße eingestellt werden. Der Vorteil der expandierbaren Mikrokugeln liegt überraschenderweise darin, dass damit bei gleicher Dichte eine höhere Steifigkeit der Profildichtung erreicht werden konnte als mit chemischen Treibmitteln und eine Wärmeleitfähigkeit der Elastomerzusammensetzung der Profildichtung von λ < 0,060 W/(m·K) erreicht werden konnte.

Zusätzlich zu den Mikrokugeln kann ein chemisches Treibmittel eingesetzt werden. Ein chemisches Treibmittel kann eine Substanz sein, welche sich bei einer bestimmten Temperatur unter Abgabe eines Gases, beispielsweise Kohlenstoffdioxid, zersetzt. Als chemische Treibmittel können beispielsweise Isocyanat, Wasser, Azodicarbonamid, Hydrazin, insbesondere p-Toluolsulfonylhydrazid (TSH), und/oder 4,4'-Oxydi(benzolsulfonohydrazid) (OBSH) und/oder Natriumbicarbonat eingesetzt werden. Die erfindungsgemäße Werkstoffmischung kann kein chemisches Treibmittel, ein chemisches Treibmittel oder eine Mischung aus verschiedenen chemischen Treibmitteln enthalten. Vorteil des chemischen Treibmittels bzw. der chemischen Treibmittel ist die Verringerung der Dichte der Profildichtung durch Porenbildung.

Der Hilfsstoff kann ein Alterungsschutzmittel, ein Vulkanisations-Verzögerer, ein Harz und/oder ein Verarbeitungshilfsmittel sein. Der Hilfsstoff kann der Werkstoffmischung zur Optimierung der Verarbeitungseigenschaften und der Oberflächenbeschaffenheit der Profildichtung zugegeben werden. Das Verarbeitungshilfsmittel kann Vaseline, Faktis (=künstlicher Kautschuk, Ölkautschuk), Paraffinwachs, Zinksalz, eine Fettsäure, ein Fettalkohol, ein Fettsäureester, Fettsäureamid, Polyolefin-Wachs und/oder Stearinsäure sein. In einer Werkstoffmischung können mehrere verschiedene Verarbeitungshilfsmittel eingesetzt werden. Vorteil des Verarbeitungshilfsmittels ist die einfache, kostengünstige Verarbeitung der Werkstoffmischung und die Vermeidung von Defekten, wie unerwünschte Gaseinschlüsse in der Profildichtung, welche die Steifigkeit und/oder Elastizität der Profildichtung verringern können.

Das Trocknungsmittel kann eine Substanz sein, welche dazu geeignet ist, Feuchtigkeit aufzunehmen. Als Trocknungsmittel kann Calciumchlorid (CaCl₂), wasserfreies Magnesiumsulfat (MgSO₄), wasserfreies Calciumsulfat (CaSO₄), Silicagel, Zeolithe und vorzugsweise Calciumoxid (CaO), eingesetzt werden. In der Werkstoffmischung können mehrere verschiedene Trocknungsmittel eingesetzt werden. Das Trocknungsmittel hat den Vorteil, unerwünschte Feuchtigkeit in der Werkstoffmischung zu verringern und die Lebensdauer der Profildichtung zu erhöhen.

Gemäß einer Ausführungsform wird die Werkstoffmischung auf eine Temperatur von 75-300 °C, bevorzugt 200-280 °C, bevorzugter 210-270 °C erhitzt. Bei einer Temperatur von 75-300 °C kann eine Vulkanisation der Werkstoffmischung und eine Expansion der Mikrokugeln erfolgen. Vorteil des Temperaturbereichs von 75-300 °C ist eine einfache Durchführung des Verfahrens ohne strenge Temperaturkontrolle. Vorteil des Temperaturbereichs von 200-280 °C ist die kontrollierte Expansion der Mikrokugeln und die verbesserte Steifigkeit der Profildichtung. Der Temperaturbereich von 210-270 °C ermöglicht eine gleichmäßige und kontrollierte Expansion der Mikrokugeln und eine optimale Steifigkeit der Profildichtung und eine niedrige Wärmeleitfähigkeit der Profildichtung.

Gemäß einer weiteren Ausführungsform ist die Werkstoffmischung extrudierbar, kalandrierbar und/oder pressbar. Die Werkstoffmischung kann durch Extrudieren, Kalandrieren oder Pressung geformt werden. Besonders bevorzugt erfolgt das Formen der Werkstoffmischung durch Extrusion. Vorteil der extrudierbaren, kalandrierbaren und/oder pressbaren Werkstoffmischung ist, dass eine Bearbeitung, insbesondere eine Formgebung, der Werkstoffmischung trotz der hohen Steifigkeit der Profildichtung ermöglicht wird. Eine Formung der Werkstoffmischung wird im großen Maßstab mit industriellen Methoden ermöglicht.

Gemäß einer Ausführungsform erfolgt das Extrudieren, Kalandrieren oder die Pressung der Werkstoffmischung während des Erhitzens, vorzugsweise während der Vulkanisation.

Gemäß einem Aspekt der Erfindung weist die Elastomerzusammensetzung, aus der die Profildichtung gebildet ist, eine Wärmeleitfähigkeit λ < 0,060 W/(m·K), bevorzugter λ < 0,057 W/(m·K), noch bevorzugter < 0,050 W/(m·K) und am bevorzugtesten < 0,045 W/(m·K) auf.

Die Profildichtung umfasst die erfindungsgemäße Elastomerzusammensetzung. Die Profildichtung kann ganz oder teilweise aus der Elastomerzusammensetzung gefertigt werden. Die Elastomerzusammensetzung kann durch Verarbeitung der erfindungsgemäßen Werkstoffmischung hergestellt werden. Die erfindungsgemäße Elastomerzusammensetzung kann insbesondere durch Vulkanisation der Werkstoffmischung hergestellt werden. Ferner kann erfindungsgemäße Elastomerzusammensetzung durch Extrusion und/oder Kalandrieren der Werkstoffmischung hergestellt werden.

Die Profildichtung kann ganz (zu 100 %) oder zu einem Teil (z. B. 10 %, 50 % oder 80 %) aus der erfindungsgemäßen Elastomerzusammensetzung bestehen.

Gemäß einer weiteren Ausführungsform weist die erfindungsgemäße Elastomerzusammensetzung, aus welchem die Profildichtung zumindest teilweise besteht, eine hohe Stauchhärte auf. Die Stauchhärte der erfindungsgemäßen Elastomerzusammensetzung kann bei einer Kompression (d.h. Stauchung) eines Prüfkörpers gemessen werden. Die Stauchhärte kann beispielsweise bei einer Kompression von 25 % gemessen werden. Das bedeutet, dass die Höhe eines Prüfkörpers während der Krafteinwirkung um 25 % geringer ist als vor der Krafteinwirkung. Die Kraft bzw. der Druck kann in Kilo-Pascal (kPa) angegeben werden. Der Prüfkörper kann ein quadratischer Prüfkörper sein. Der Prüfkörper kann aus der erfindungsgemäßen Werkstoffmischung bestehen bzw. diese umfassen. Die Stauchhärte kann nach ISO 3386 bestimmt werden, indem der Prüfkörper zwischen zwei Platten um einen gewissen Prozentsatz komprimiert wird und die dazu notwendige Kraft gemessen wird. Die erfindungsgemäße Elastomerzusammensetzung weist vorzugsweise eine Stauchhärte von mindestens 100 kPa, bevorzugt mindestens 300 kPa, bevorzugter mindestens 500 kPa, bei einer Kompression von 25 %, von mindestens 200 kPa, bevorzugt mindestens 500 kPa, bevorzugter mindestens 800 kPa, bei einer Kompression von 40 % und/oder von mindestens 300 kPa, bevorzugter mindestens 800 kPa und am bevorzugtesten mindestens 1000 kPa, bei einer Kompression von 50 % auf.

Gemäß einer weiteren Ausführungsform weist erfindungsgemäße Elastomerzusammensetzung, aus welchem die Profildichtung ganz oder teilweise besteht, einen optimalen Druckverformungsrest auf. Gemäß dieser Ausführungsform weist die erfindungsgemäße Elastomerzusammensetzung einen Druckverformungsrest von kleiner oder gleich 70 %, bevorzugter kleiner oder gleich 60 %, am bevorzugtesten kleiner oder gleich 55 % bei einer Kompression von 25 % für 24 Stunden bei 70 °C und/oder einen Druckverformungsrest von kleiner oder gleich 50 %, bevorzugter kleiner oder gleich 40 %, am bevorzugtesten kleiner oder gleich 30 % bei einer Kompression von 25 % für 24 Stunden bei 23 °C und/oder einen Druckverformungsrest von kleiner oder gleich 80 %, bevorzugt kleiner oder gleich 70 %, am bevorzugtesten kleiner oder gleich 60 % bei einer Kompression von 25 % für 24 Stunden bei -10 °C auf. Der Druckverformungsrest (DVR) ist ein Maß dafür, wie sich ein Elastomer bei lang andauernder, konstanter Druckverformung und anschließender Entspannung verhält. Nach DIN 53 517 bzw. **DIN** ISO 8 15 oder ASTM D 395 wird der Druckverformungsrest bei konstanter Verformung gemessen. Zur Bestimmung des DVR wird ein Prüfkörper um 25 % zusammengedrückt (d.h. komprimiert) und bei einer bestimmten Temperatur für eine bestimmte Dauer (z. B. 24 Stunden) gelagert. Eine gewisse Zeit nach der Entlastung, z. B. 30 Minuten nach der Entlastung, wird bei Raumtemperatur die Höhe des Prüfkörpers gemessen und aus der Differenz zwischen der Höhe des Prüfkörpers vor der Krafteinwirkung und der Höhe des Prüfkörpers nach der Krafteinwirkung die bleibende Verformung ermittelt.

Gemäß einer weiteren Ausführungsform enthält die erfindungsgemäße Werkstoffmischung und die erfindungsgemäße Elastomerzusammensetzung 20-100 phr Weichmacher. Vorteil der Elastomerzusammensetzung mit 20-100 phr Weichmacher ist die verbesserte Verarbeitbarkeit der Elastomerzusammensetzung und eine hohe Elastizität der Profildichtung.

Gemäß einer weiteren Ausführungsform enthält die erfindungsgemäße Elastomerzusammensetzung 50-180 phr Füllstoff. Vorteil der Elastomerzusammensetzung mit 50-180 phr Füllstoff ist eine optimale Steifigkeit der Profildichtung und die niedrige Wärmeleitfähigkeit.

Gemäß einer weiteren Ausführungsform enthält die erfindungsgemäße Elastomerzusammensetzung 5-10 phr Vernetzer. Vorteil der Elastomerzusammensetzung mit 5-10 phr Vernetzer ist ein optimaler Vernetzungsgrad, welcher zugleich eine hohe Elastizität und eine hohe Steifigkeit der Profildichtung ermöglicht, sowie die hohe Lebensdauer der Profildichtung.

Gemäß einer weiteren Ausführungsform enthält die erfindungsgemäße Werkstoffmischung 25-40 phr, bevorzugt 25-38 phr expandierbare Mikrokugeln. Die aus dem Werkstoff erhältliche Elastomerzusammensetzung umfasst daher 25-40 phr, bevorzugt 25-38 phr expandierte Mikrokugeln.

Vorteil der Elastomerzusammensetzung mit den genannten Mengen an expandierten Mikrokugeln ist die reduzierte Wärmeleitfähigkeit der Profildichtung im Vergleich zu Profildichtungen mit einem geringeren Anteil an Mikrohohlkugeln und die erhöhte Steifigkeit der Profildichtung.

Gemäß einer weiteren Ausführungsform enthält die erfindungsgemäße Werkstoffmischung 1-15 phr, bevorzugter 5-10 phr chemisches Treibmittel. Vorteil der Werkstoffmischung mit 1-15 phr des chemischen Treibmittels ist die geringe Dichte der Profildichtung. Vorteil der Werkstoffmischung mit 5-10 phr des chemischen Treibmittels ist die geringe Dichte der Profildichtung und die verbesserten Wärmedämmeigenschaften.

In der erfindungsgemäßen Werkstoffmischung können das chemische Treibmittel und ein physikalisches Treibmittel, insbesondere die expandierbaren Mikrokugeln, verwendet werden. Die Kombination aus dem chemischen Treibmittel und den expandierbaren Mikrokugeln hat den Vorteil, dass das Verarbeitungsverhalten der Werkstoffmischung und der daraus erhältlichen Elastomerzusammensetzung, insbesondere bei der Extrusion verbessert werden kann. Ferner hat die Verwendung des chemischen Treibmittels in Kombination mit den expandierbaren Mikrokugeln den Vorteil, dass eine geringere Menge an expandierbaren Mikrokugeln in der Werkstoffmischung ausreicht, um eine niedrige Dichte der Profildichtung zu erreichen. Ferner hat die Kombination aus dem chemischen Treibmittel und den expandierbaren Mikrohohlkugeln den Vorteil, dass die daraus erhältliche Elastomerzusammensetzung eine hohe Stauchhärte aufweist.

Gemäß einer weiteren Ausführungsform enthält die erfindungsgemäße Werkstoffmischung und die daraus erhältlichen Elastomerzusammensetzung 1-10 phr Hilfsstoff oder Verarbeitungshilfsmittel. Vorteil der Werkstoffmischung und der daraus erhältlichen Elastomerzusammensetzung mit 1-10 phr Hilfsstoff oder Verarbeitungshilfsmittel ist die Optimierung der Verarbeitbarkeit der Werkstoffmischung und der daraus erhältlichen Elastomerzusammensetzung, und die hohe Steifigkeit in Kombination mit einer hohen Elastizität der Profildichtung.

Gemäß einer weiteren Ausführungsform enthält die erfindungsgemäße Werkstoffmischung und die daraus erhältlichen Elastomerzusammensetzung 1-20 phr, bevorzugt 2-10 phr Trocknungsmittel. Vorteil der Werkstoffmischung und der daraus erhältlichen Elastomerzusammensetzung mit 1-20 phr Trocknungsmittel ist die erhöhte Lebensdauer der Profildichtung. Vorteil der Werkstoffmischung und der daraus erhältlichen Elastomerzusammensetzung mit 2-10 phr Trocknungsmittel ist die verbesserte Verarbeitbarkeit der Werkstoffmischung und der daraus erhältlichen Elastomerzusammensetzung, die verbesserten Wärmedämmeigenschaften, das Vermeiden von unkontrollierter Porosität durch Feuchtigkeit in der Werkstoffmischung, und die erhöhte Lebensdauer der Profildichtung.

Die Vorteile der erfindungsgemäßen Profildichtung sind die hohe Steifigkeit, die geringe Dichte, die geringe Wärmeleitfähigkeit, die guten Wärmedämmeigenschaften und die lange Lebensdauer. Die Elastizität und das Rückstellverhalten der erfindungsgemäßen Profildichtung sind im Vergleich zu herkömmlichem Moosgummi oder herkömmlichen Moosgummi-Mischungen verbessert. Die erfindungsgemäße Profildichtung kann als reines Isolationsmaterial, als Mitteldichtung, als Seitendichtung und/oder als Dämmstreifen, insbesondere für Fenster und Türen verwendet werden.

Unter Moosgummi oder herkömmlichem Moosgummi wird im Sinne der Erfindung ein überwiegend geschlossenporiger, elastischer Schaumstoff bezeichnet, der keine expandierten Mikrokugeln enthält. Moosgummi in diesem Sinne wird in der Regel mit chemischen Treibmitteln hergestellt.

Die Erfindung betrifft auch ein Verfahren zur Herstellung einer erfindungsgemäßen Profildichtung, umfassend die folgenden Schritte:

| | |
|---|---|
| Schritt S1: | Bereitstellen der folgenden Komponenten: |
| | - 100 phr Elastomer |
| | - 0-300 phr, bevorzugt 10-150 phr, besonders bevorzugt 20-100 phr, Weichmacher |
| | - 0-600 phr, bevorzugt 20-400 phr, besonders bevorzugt 50-180 phr, Füllstoff |
| | - 0-30 phr, bevorzugt 1-30 phr, weiter bevorzugt 3-12 phr, besonders bevorzugt 5-10 phr, Vernetzer |
| | - 25-40 phr, bevorzugt 25-38 phr expandierbare Mikrokugeln |
| | - 0-100 phr, bevorzugt 1-15, besonders bevorzugt 5-10 phr, chemisches Treibmittel |
| | - 0-100 phr, bevorzugt 1-50 phr, besonders bevorzugt 1-10 phr, Hilfsstoff |
| | - 0-30 phr, bevorzugt 1-20 phr, besonders bevorzugt 2-10 phr, Trocknungsmittel; |
| Schritt S2: | Mischen der Komponenten, insbesondere in einem Mischer oder einem Mixer, um eine erfindungsgemäße Werkstoffmischung zu erhalten; |
| Schritt S3: | Formen der erfindungsgemäßen Werkstoffmischung zu einer Profildichtung, insbesondere durch Extrusion, Kalandrieren oder Pressung. |
| Schritt S4: | Erhitzen der erfindungsgemäßen Werkstoffmischung auf eine Temperatur, vorzugsweise eine Vulkanisationstemperatur, von 75-300 °C, bevorzugt 200-280 °C, besonders bevorzugt 210-270 °C, um eine erfindungsgemäße Profildichtung aus einer Elastomerzusammensetzung zu bilden. |

Gemäß einer Ausführungsform erfolgt das Extrudieren, Kalandrieren oder die Pressung während des Erhitzens, bevorzugt der Vulkanisation der erfindungsgemäßen Werkstoffmischung. Die Schritte S3 und S4 können somit gleichzeitig oder hintereinander durchgeführt werden. Das Formen der Werkstoffmischung mittels Extrusion, Kalandrieren oder Pressung während der Erhitzung, bevorzugt der Vulkanisation hat den Vorteil einer kostengünstigen und energieeffizienten Prozessführung.

Gemäß einer Ausführungsform erfolgt das Erhitzen, bevorzugt die Vulkanisation, kontinuierlich direkt nach der Formgebung durch Extrusion. Die Erhitzung, bevorzugt die Vulkanisation kann dabei durch UHF (Ultrahochfrequenz) und/oder Heißluft, durch Hitzeübertragung mittels Dampf oder ein flüssiges Vulkanisationsmedium, wie beispielsweise Kaliumnitrit und/oder Kaliumnitrat Salz, erfolgen.

Alle Vorteile und Merkmale der erfindungsgemäßen Profildichtung lassen sich analog auf das Verfahren übertragen, und umgekehrt. Einzelne der oben genannten Merkmale und Ausführungsformen können miteinander kombiniert werden und die den einzelnen Merkmalen zugeordneten Vorteile gelten auch für eine Kombination dieser Merkmale. Das Mischen der Komponenten, das Erhitzen der Werkstoffmischung und das Formen der Werkstoffmischung kann mit Geräten und Verfahren aus dem Stand der Technik erfolgen.

Die Erfindung betrifft auch eine Profildichtung, erhältlich nach dem erfindungsgemäßen Verfahren, umfassend die Schritte, dass eine Werkstoffmischung, umfassend 100 phr Elastomer und 25-40 phr expandierbare Mikrokugeln, auf eine Temperatur von 75 - 300 °C erhitzt und eine Profildichtung geformt wird.

Die Werkstoffmischung zur Herstellung der erfindungsgemäßen Profildichtung, erhältlich nach dem erfindungsgemäßen Verfahren, umfasst vorzugsweise:
- 100 phr Elastomer
- 0-300 phr, bevorzugt 10-150 phr, besonders bevorzugt 20-100 phr, Weichmacher
- 0-600 phr, bevorzugt 20-400 phr, besonders bevorzugt 50-180 phr, Füllstoff
- 0-30 phr, bevorzugt 1-30 phr, weiter bevorzugt 3-12 phr, besonders bevorzugt 5-10 phr, Vernetzer
- 25-40 phr, bevorzugt 25-38 phr expandierbare Mikrokugeln
- 0-100 phr, bevorzugt 1-15 phr, besonders bevorzugt 5-10 phr, chemisches Treibmittel
- 0-100 phr, bevorzugt 1-50 phr, besonders bevorzugt 1-10 phr, Hilfsstoff
- 0-30 phr, bevorzugt 1-20 phr, besonders bevorzugt 2-10 phr, Trocknungsmittel.

Die Herstellung der Profildichtung, erhältlich nach dem erfindungsgemäßen Verfahren, erfolgt durch Erhitzen der Werkstoffmischung auf eine Temperatur von 75-300 °C, bevorzugt 200-280 °C, bevorzugter 210-270 °C und Formen der Profildichtung, beispielsweise durch Extrudieren, Kalandrieren oder Pressen. Beim Erhitzen erfolgt die Expansion der expandierbaren Mikrokugeln zu expandierten Mikrokugeln. Wenn Vernetzer in der Werkstoffmischung enthalten ist, kann ferner eine Vernetzung des Elastomers stattfinden.

Die Erfindung ist auch auf eine Geometrie für eine Profildichtung aus der erfindungsgemäßen Elastomerzusammensetzung gerichtet. Die Geometrie kann die dreidimensionale Form der Profildichtung oder ein zweidimensionaler Querschnitt senkrecht zur Längsrichtung sein. Im Folgenden wird die erfindungsgemäße Geometrie anhand des zweidimensionalen Querschnitts senkrecht zur Längsrichtung der Profildichtung beschrieben.

Die erfindungsgemäße Profildichtung umfasst einen Kopfbereich und einen Fußbereich. Der Kopfbereich kann die obere Hälfte der Profildichtung sein. Der Fußbereich kann die untere Hälfte der Profildichtung sein. Die obere oder untere Hälfte können die oberen oder unteren 50 ± 10 % der Höhe der Profildichtung sein.

Die obere Hälfte der Profildichtung kann die Hälfte sein, welche dazu ausgebildet ist, der Scheibe zugewandt zu sein. Die untere Hälfte der Profildichtung kann die Hälfte sein, die dazu ausgebildet ist, dem Rahmen einer Tür oder eines Fensters zugewandt zu sein. Der Rahmen kann der Teil eines Fensters oder einer Tür sein, welcher dazu ausgebildet ist, eine Scheibe zu fixieren und in ein Mauerwerk eingesetzt zu werden. Der Rahmen kann aus Kunststoff oder Holz gefertigt sein.

Die Profildichtung weist eine Höhe und eine Breite auf. Die Höhe kann der Abstand zwischen der höchsten und niedrigsten Position der Profildichtung sein. Die höchste Position kann sich im Kopfbereich, bevorzugt in einer Anlageschulter befinden. Die niedrigste Position kann sich im Fußbereich, bevorzugt in einem Haltebereich befinden. Der Haltebereich kann ein Bereich der Profildichtung sein, welcher dazu ausgebildet ist, die Profildichtung in einem Rahmen zu fixieren. Ein Haltebereich kann als Halte-Wulst oder als Halterung ausgebildet sein. Vorteil des Haltebereichs ist die einfache, stabile Fixierung der Profildichtung in dem Rahmen und die verbesserten Dämmeigenschaften des Fensters bzw. der Tür. Die Breite einer Profildichtung kann der Abstand von einer Außenkante zu der anderen Außenkante der Profildichtung sein. Bevorzugt ist die Profildichtung bei der Bestimmung des Abstands so orientiert, dass sich der Kopfbereich oben und der Fußbereich unten befindet.

Der Kopfbereich kann einen Mittelsteg aufweisen. Der Mittelsteg ist bevorzugt dazu ausgebildet, einer Scheibe, insbesondere der Unterkante einer Scheibe zugewandt zu sein. Der Mittelsteg kann flach ausgebildet sein. Vorteil des flachen Mittelstegs ist einfache Herstellung der Profildichtung Der Mittelsteg kann aber auch über eine oder mehrere Einmündungen und/oder Erhebungen verfügen. Einmündungen können insbesondere Löcher oder Schlitze sein, welche sich entlang der Längsrichtung der Profildichtung erstrecken. Die Erhebungen können derart ausgebildet sein, dass ein Teil des Mittelstegs nicht flach in einer Ebene mit dem übrigen Mittelsteg liegt, sondern aus dieser hervorragt. Die Erhebungen können aus der erfindungsgemäßen Elastomerzusammensetzung, aus einer Moosgummi-Mischung, einem Elastomer, einem Silikon oder einer Weichgummi-Mischung gefertigt sein. Vorteil der Erhebungen aus der erfindungsgemäßen Elastomerzusammensetzung ist die einfache Herstellung durch Extrusion, Kalandrieren oder Pressung und die geringe Wärmeleitfähigkeit. Vorteil der Erhebungen aus einer Moosgummi-Mischung, einem Elastomer, einem Silikon oder einer Weichgummi-Mischung ist die individuelle Anpassung der Erhebungen und eine individuelle Optimierung der Dämmeigenschaften an der Kontaktstelle zwischen Scheibe und Mittelsteg. Die Einmündungen und/oder Erhebungen können jede Form, die sich in eine Längsrichtung erstrecken kann, aufweisen. Die Einmündungen und/oder Erhebungen können insbesondere eine runde, elliptische oder vieleckige Form aufweisen. Die Einmündungen und/oder Erhebungen können auch die Form einer Aneinanderreihung verschiedener geometrischer Formen, insbesondere eine Wellenform, aufweisen. Vorteil der Einmündungen und/oder Erhebungen ist, dass die Profildichtung im Bereich des Mittelstegs leichter komprimiert werden kann und somit ein Einsetzen der Scheibe erleichtert werden kann. Ferner haben die Einmündungen und/oder Erhebungen den Vorteil, dass der Kontaktbereich zwischen der Scheibe und dem Mittelsteg erhöhte Dämmeigenschaften aufweist und die Wärmedämmung des Fensters bzw. der Tür verbessert wird. Der Mittelsteg kann aus der erfindungsgemäßen Elastomerzusammensetzung gefertigt sein. Vorteil des Mittelstegs aus der erfindungsgemäßen Elastomerzusammensetzung ist die geringe Wärmeleitfähigkeit und die guten Dämmeigenschaften. Der Mittelsteg kann auch aus einem herkömmlichen Moosgummi oder einer Moosgummi-Mischung, einem Elastomer, einem Silikon oder einer Weichgummi-Mischung gefertigt sein. Vorteil dieses Mittelstegs ist, dass die Elastizität im Bereich des Mittelstegs individuell an das Gewicht der Scheibe angepasst werden kann, sodass eine optimale Wärmedämmung erreicht werden kann.

Der Kopfbereich kann eine Anlageschulter aufweisen. Die Anlageschulter kann eine Erhebung sein, welche sich seitlich neben dem Mittelsteg befindet. Eine erste Seite der Anlageschulter kann dazu ausgebildet sein, einer Scheibe zugewandt zu sein, insbesondere einer Seitenkante einer Scheibe. Eine zweite Seite der Anlageschulter kann dazu ausgebildet sein, einer Scheibe abgewandt und einem Rahmen eines Fensters oder einer Tür zugewandt zu sein. Eine Anlageschulter kann verschiedene geometrische Formen wie eine kreisförmige, halbkreisförmige, elliptische oder vieleckige Form, insbesondere eine vieleckige Form mit abgerundeten Ecken, aufweisen, aber auch flach ausgebildet sein, sodass die Anlageschulter in derselben Ebene liegt, wie der Mittelsteg. Vorteil der flachen Anlageschulter ist die einfache, kostengünstige Herstellung der Profildichtung. Vorteil der Anlageschulter, welche als Erhebung ausgebildet ist, ist, dass die Scheibe optimal fixiert werden kann und die Wärmedämmung erhöht wird.

Bevorzugt kann die Anlageschulter eine Form, welche im Wesentlichen der Form eines Trapezes entspricht, aufweisen. Die Form, welche im Wesentlichen der Form eines Trapezes entspricht, kann jede Form sein, die einem Trapez ähnlich ist, insbesondere kann die Form ein Trapez mit abgerundeten sein. Des Weiteren kann die Form derart ausgebildet sein, dass die obere Seite der Trapez-ähnlichen Form schräg verläuft, also einen Winkel zwischen 1° und 45°, bevorzugt zwischen 2° und 30° zur Horizontalen aufweist. Vorteil des Winkels zwischen 1° und 45° ist die vereinfachte Fixierung der Profildichtung in dem Rahmen. Vorteil des Winkels zwischen 2° und 30° zur Horizontalen ist, eine vereinfachte und verbesserte Fixierung der Profildichtung in dem Rahmen. Die Anlageschulter kann Erhebungen und/oder Einmündungen bzw. Rücksprünge umfassen. Einmündungen bzw. Rücksprünge können jede geometrische Form, insbesondere eine kreisförmige, halbkreisförmige oder vieleckige Form aufweisen. Vorteil der Einmündungen bzw.

Rücksprünge ist eine stabilere Fixierung der Profildichtung in dem Rahmen. Die Anlageschulter kann aus der erfindungsgemäßen Elastomerzusammensetzung, einer Moosgummi-Mischung, einem Elastomer, einem Silikon oder einer Weichgummi-Mischung gefertigt sein. Vorteil der Anlageschulter aus der erfindungsgemäßen Elastomerzusammensetzung ist die geringe Wärmeleitfähigkeit. Die Anlageschulter kann aus einem Material bzw. einer Materialmischung, oder aus mehreren verschiedenen, insbesondere zwei verschiedenen Materialien, bestehen. Vorteil der Anlageschulter aus einer Moosgummi-Mischung, einem Elastomer, einem Silikon, einer Weichgummi-Mischung oder aus einer oder mehrerer Materialmischungen ist die Möglichkeit, die Anlageschulter individuell an die Form verschiedener Rahmen anzupassen und somit für verschiedenen Rahmenformen eine gute Wärmedämmung zu ermöglichen.

Der Fußbereich der Profildichtung kann einen Haltebereich umfassen, welcher dazu ausgebildet ist, die Profildichtung in einem Rahmen eines Fensters oder einer Tür mechanisch zu fixieren. Zusätzlich zu einem oder mehreren Haltebereichen im Fußbereich kann ein Haltebereich oder können mehrere Haltebereiche in dem Kopfbereich angebracht werden. Bevorzugt kann der Haltebereich eine Form aufweisen, welche eine mechanische Befestigung der Profildichtung in einem Rahmen eines Fensters oder einer Tür ermöglicht. Der Haltebereich kann insbesondere Halte-Wulste, Verdickungen, Erhebungen, Haken und Einmündungen aufweisen. Vorteil des Haltebereichs ist die stabile Fixierung der Profildichtung in dem Rahmen und die Erhöhung der Wärmedämmung des Fensters bzw. der Tür. Der Fußbereich der Profildichtung kann einen oder mehrere Haltebereiche aufweisen. Ein Haltebereich kann sich über einen Teilbereich oder über die gesamte Breite des Fußbereichs erstrecken. Mehrere Haltebereiche können verschiedene Formen oder dieselbe Form aufweisen und aus demselben oder aus verschiedenen Materialien bestehen. Ein Haltebereich kann aus der erfindungsgemäßen Elastomerzusammensetzung, einer Moosgummi-Mischung, einem Elastomer, einem Silikon oder einer Weichgummi-Mischung gefertigt sein.

Die Profildichtung kann einen oder mehrere Luftkanäle aufweisen. Ein Luftkanal kann eine hohle Form sein, welche sich innerhalb der Profildichtung befindet und sich in Längsrichtung erstreckt. Die Profildichtung kann keine, einen oder mehrere Luftkanäle aufweisen. Die Profildichtung kann 1-10, bevorzugt 1-7 und am bevorzugtesten 2-7 Luftkanäle aufweisen. Die Luftkanäle können jede geometrische Form aufweisen, welche sich in Längsrichtung erstrecken kann. Die Luftkanäle können eine kreisförmige, halbkreisförmige, elliptische oder vieleckige Form, insbesondere die Form von Vielecken mit abgerundeten Ecken, aufweisen. Vorteil der Luftkanälen in der Profildichtung ist das Einsparen von Material, das geringe Gewicht der Profildichtung, die verbesserten Wärmedämmeigenschaften und die erhöhte Elastizität.

Die erfindungsgemäße Profildichtung kann zu 100 % aus der erfindungsgemäßen Elastomerzusammensetzung bestehen. Teilbereiche der erfindungsgemäßen Profildichtung können aus einem oder mehreren anderen Materialien bestehen. Andere Materialien können Materialien des Stands der Technik sein. Andere Materialien können bevorzugt Moosgummi, Moosgummi-Mischungen, Weichgummi oder Weichgummi-Mischungen sein. Der Teilbereich kann insbesondere ein Teilbereich eines Querschnitts der Profildichtung sein. Der Teilbereich kann der Kopfbereich, ein Teilbereich des Kopfbereichs, die Anlageschulter, ein Teilbereich der Anlageschulter, der Mittelsteg, ein Teilbereich des Mittelstegs, der Haltebereich oder ein Teilbereich des Haltebereichs sein. Der Teilbereich kann jeder Teil oder prozentuale Anteil der Profildichtung sein, der kleiner ist als die gesamte Profildichtung, wobei die gesamte Profildichtung 100 % entspricht. Es können < 100 % der Profildichtung, bevorzugt < 90 % der Profildichtung, bevorzugter < 75 % der Profildichtung, besonders bevorzugt < 50 % der Profildichtung aus einem oder mehreren anderen Materialien bestehen. Vorteil der Profildichtung, welche zu < 100 % aus einem Material des Stands der Technik besteht, ist die Wärmeleitfähigkeit, welche im Vergleich zu Profildichtungen, welche komplett aus Materialien des Stands der Technik bestehen, erniedrigt wird. Vorteil der Profildichtung, welche zu weniger als < 90 % aus einem Material des Stands der Technik besteht ist die niedrige Wärmeleitfähigkeit. Vorteil der Profildichtung, welche zu weniger als < 75 % aus einem Material des Stands der Technik besteht, ist die niedrige Wärmeleitfähigkeit und die erhöhte Steifigkeit der Profildichtung. Vorteil der Profildichtung, welche zu weniger als < 50 % aus einem Material des Stands der Technik besteht ist die optimale Steifigkeit der Profildichtung und die niedrige Wärmeleitfähigkeit.

Die Vorteile und weiteren Merkmale der Erfindung ergeben sich aus der nachfolgenden Beschreibung bevorzugter Ausführungsformen des erfindungsgemäßen Gegenstands mit Bezug auf die beigefügten Figuren. Die folgende Beschreibung dient lediglich der Verdeutlichung der Erfindung und sollte nicht derart aufgefasst werden, dass durch sie die beiliegenden Ansprüche auf eine der Ausführungsformen beschränkt werden. Es zeigen
- **Fig. 1** - **Fig. 6**: eine Seitenansicht eines Querschnitts einer Mitteldichtung gemäß jeweils einer Ausführungsform der Erfindung, bestehend aus einer erfindungsgemäßen Elastomerzusammensetzung
- **Fig. 7** - **Fig. 11**: eine Seitenansicht eines Querschnitts einer Mitteldichtung gemäß jeweils einer Ausführungsform der Erfindung, bestehend aus einer erfindungsgemäßen Elastomerzusammensetzung und einer Moosgummi-Mischung des Stands der Technik
- **Fig. 12 - Fig. 15**: eine Seitenansicht eines Querschnitts einer Mitteldichtung gemäß jeweils einer Ausführungsform der Erfindung, bestehend aus einer erfindungsgemäßen Elastomerzusammensetzung und einer Weichgummi-Mischung des Stands der Technik
- **Fig. 16 - Fig. 22**: eine Seitenansicht eines Querschnitts einer Seitendichtung gemäß jeweils einer Ausführungsform der Erfindung, bestehend aus einer erfindungsgemäßen Elastomerzusammensetzung und einer Moosgummi-Mischung des Stands der Technik.
- **Fig. 23 - Fig. 31**: eine Seitenansicht eines Querschnitts eines Dämmstreifens gemäß jeweils einer Ausführungsform der Erfindung, bestehend aus einer erfindungsgemäßen Elastomerzusammensetzung.

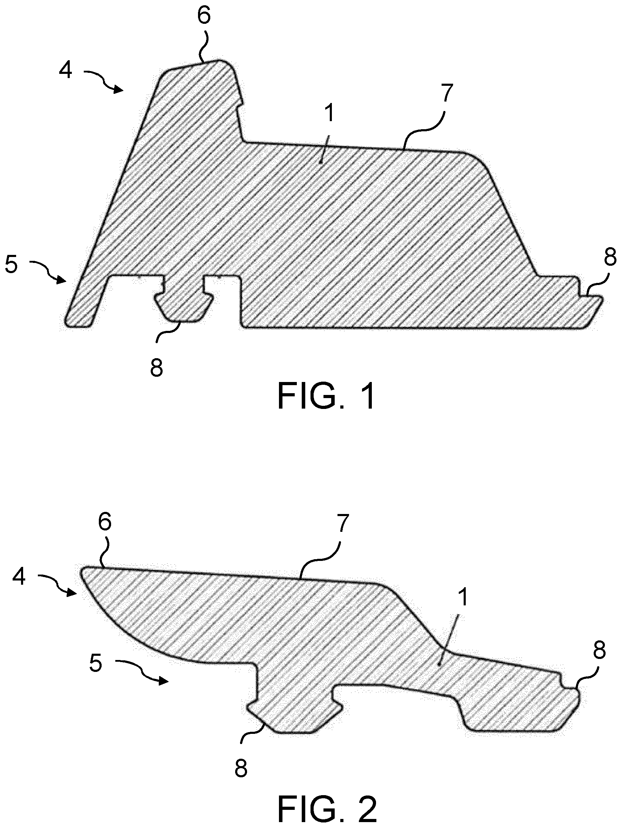

**Figur 1** zeigt eine Seitenansicht eines Querschnitts einer Mitteldichtung gemäß einer Ausführungsform der Erfindung. Der mit schräg verlaufenden Linien schraffierte Bereich entspricht dem Teil der Mitteldichtung, welcher aus der erfindungsgemäßen Elastomerzusammensetzung 1 besteht. Gemäß der gezeigten Ausführungsform besteht die Profildichtung vollständig aus der erfindungsgemäßen Elastomerzusammensetzung 1. Die Profildichtung weist einen flachen Mittelsteg 7 auf. Die Profildichtung weist auch eine Anlageschulter 6 auf, welche sich neben dem Mittelsteg 7 befindet und eine Trapez-ähnliche Form mit schräger Oberseite aufweist. Die Anlageschulter weist auf der Seite, welche dazu ausgebildet ist, einer Scheibe zugewandt zu sein, in der Nähe des Mittelstegs 7 eine schmale Einmündung, dessen Form einem Rechteck mit abgerundeten Ecken ähnlich ist, auf. Die Außenkanten der Profildichtung sind schräg angeordnet, sodass die Profildichtung in Richtung des Fußbereichs 5 breiter wird. Der Fußbereich 5 weist in dem Bereich unterhalb der Anlageschulter 6 einen Haltebereich 8, bestehend aus einer Einmündung mit einer Halte-Noppe 8 auf, wobei die Halte-Noppe 8 die Form eines Rechtecks, an dessen Unterseite sich ein Trapez befindet, aufweist. Der Fußbereich 5 weist ferner auf der gegenüberliegenden Seite einen weiteren Haltebereich 8, welcher eine rechteckige und eine Trapez-ähnliche Erhebung umfasst, auf.

**Figur 2** zeigt eine Seitenansicht eines Querschnitts einer Mitteldichtung gemäß einer weiteren Ausführungsform der Erfindung. Die Profildichtung besteht vollständig aus der erfindungsgemäßen Elastomerzusammensetzung 1, wie durch den schraffierten Bereich dargestellt wird. Die Profildichtung weist einen flachen Mittelsteg 7 und eine flache Anlageschulter 6 auf. Die Außenkanten der Profildichtung sind schräg angeordnet, wobei eine Seite der Profildichtung in Richtung Fußbereich 5 schmaler und die andere Seite breiter wird. Etwa in Mitte des Fußbereichs 5 befindet sich eine Halte-Noppe 8. Auf der Seite der Profildichtung, welche in Richtung des Fußbereichs 5 breiter wird, befindet sich ein weiterer Haltebereich 8, welcher annähernd die Form eines auf den Kopf stehenden Trapezes aufweist, wobei die obere, äußere Ecke des Trapezes eine Einmündung aufweist.

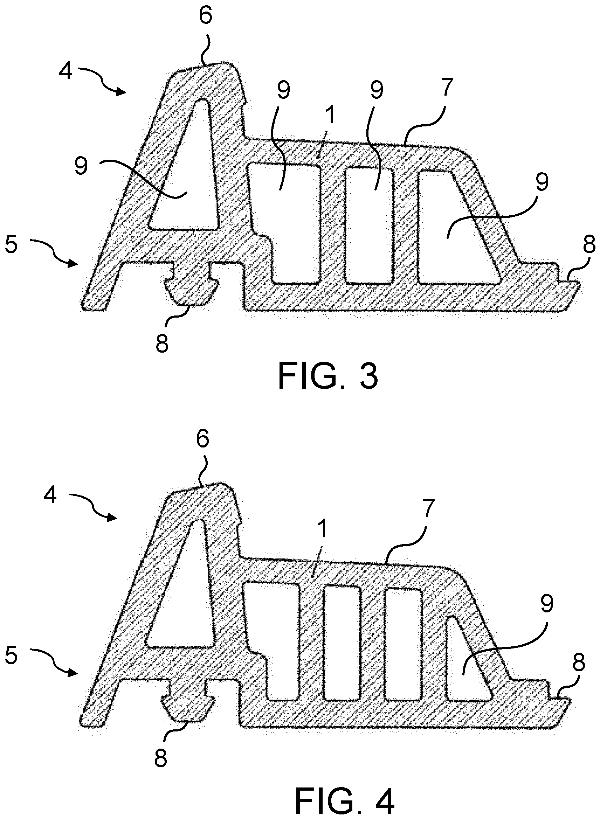

**Figur 3** zeigt eine Seitenansicht eines Querschnitts einer Mitteldichtung gemäß einer weiteren Ausführungsform der Erfindung. Diese Ausführungsform ähnelt der in Figur 1 gezeigten Ausführungsform. Im Unterschied zu der in Figur 1 gezeigten Ausführungsform weist diese Ausführungsform vier Luftkanäle 9 auf. Ein erster Luftkanal 9 weist die Form eines Dreiecks mit abgerundeten Ecken auf und befindet sich innerhalb der Anlageschulter 6 und erstreckt sich bis in den Fußbereich 5 unterhalb der Anlageschulter 6. Neben diesem Luftkanal 9 und unterhalb des Mittelstegs 7 befinden sich drei weitere Luftkanäle 9, welche sich ebenfalls vom Kopfbereich 4 der Profildichtung bis in den Fußbereich 5 erstrecken. Der zweite Luftkanal 9, welcher sich neben dem ersten Luftkanal 9 befindet, weist in etwa die Form eines Rechtecks mit abgerundeten Ecken auf, bei welchem die untere Hälfte der linken Seitenkante nach innen versetzt wurde, wodurch eine geometrische Form mit sechs Ecken entsteht, die aber keinem regulärem Sechseck entspricht. Neben dem zweiten Luftkanal 9 befindet sich ein dritter Luftkanal 9, welcher die Form eines Rechtecks mit abgerundeten Ecken aufweist. Neben dem dritten Luftkanal 9 befindet sich ein vierter Luftkanal 9, welcher die Form eines Trapezes mit abgerundeten Ecken aufweist.

**Figur 4** zeigt eine Seitenansicht eines Querschnitts einer Mitteldichtung gemäß einer weiteren Ausführungsform der Erfindung. Diese Ausführungsform ähnelt der in Figur 3 gezeigten Ausführungsform. Im Unterschied zu der in Figur 3 gezeigten Ausführungsform weist diese Ausführungsform in dem Bereich unterhalb der Profildichtung vier Luftkanäle 9 auf, wobei die zwei mittleren Luftkanäle 9 die Form von Rechtecken mit abgerundeten Ecken aufweisen.

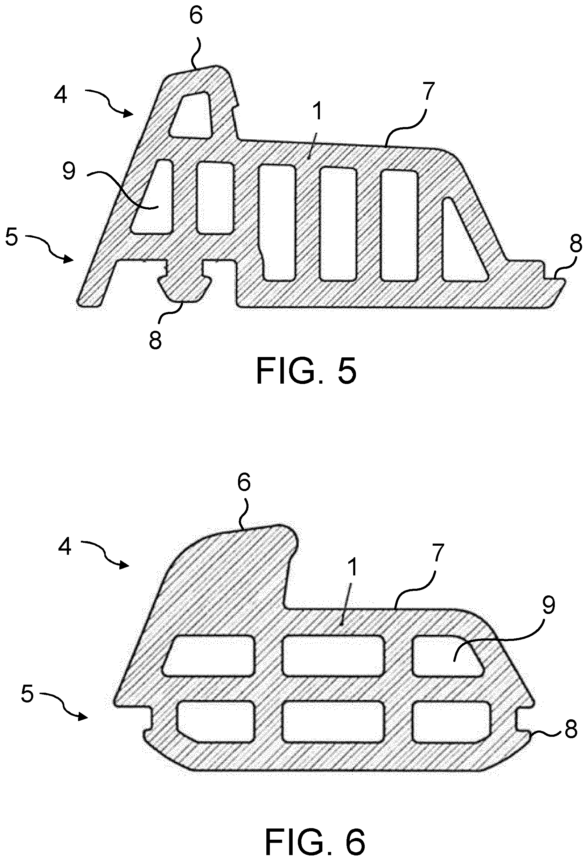

**Figur 5** zeigt eine Seitenansicht eines Querschnitts einer Mitteldichtung gemäß einer weiteren Ausführungsform der Erfindung. Diese Ausführungsform ähnelt der in Figur 4 gezeigten Ausführungsform. Im Unterschied zu der in Figur 4 gezeigten Ausführungsform weist diese Ausführungsform einen Luftkanal 9 innerhalb der Anlageschulter 6 auf, welcher sich ausschließlich im Kopfbereich 4 der Profildichtung befindet, sowie zwei weitere Luftkanäle 9 in dem Bereich unterhalb der Anlageschulter 6, welche sich vom unteren Ende des Kopfbereichs 4 bis in den Fußbereich 5 der Profildichtung erstrecken. Der Luftkanal 9 in der Anlageschulter 6 weist die Form eines Trapezes mit abgerundeten Ecken und schräger Oberseite auf. Der erste Luftkanal 9, welcher sich unterhalb der Anlageschulter 6 und am nächsten an der Außenkante der Profildichtung befindet, weist die Form eines Trapezes mit abgerundeten Ecken auf. Der zweite Luftkanal 9, welcher sich neben dem ersten Luftkanal 9 und unterhalb der Anlageschulter 6 befindet, weist die Form eines Rechtecks mit abgerundeten Ecken auf.

**Figur 6** zeigt eine Seitenansicht eines Querschnitts einer Mitteldichtung gemäß einer weiteren Ausführungsform der Erfindung. Die Profildichtung weist eine Anlageschulter 6 ohne Luftkanal 9 auf. Unterhalb der Anlageschulter 6 befinden sich zwei Luftkanäle 9, welche untereinander angeordnet sind. Der obere Luftkanal 9 hat die Form eines Trapezes mit abgerundeten Ecken. Der darunter liegende Luftkanal 9 weist eine Form auf, welche einem Rechteck mit abgerundeten Ecken ähnelt, bei welchem die untere, linke Ecke abgeschnitten wurde, wodurch sich eine fünfeckige Form ergibt, welche kein reguläres Fünfeck ist. Unterhalb des Mittelstegs 7 befinden sich vier Luftkanäle 9, wobei jeweils zwei Luftkanäle 9 übereinander angeordnet sind. Die beiden Luftkanäle 9, welche sich unterhalb eines Mittelstegs 7 befinden und mittig in der Profildichtung angeordnet sind, weisen die Form von Rechtecken mit abgerundeten Ecken auf. Die zwei weiteren Luftkanäle 9 befinden sich unterhalb des Mittelstegs 7 auf der Seite der Profildichtung, welche der Anlageschulter 6 gegenüberliegt. Der obere Luftkanal 9 weist die Form eines Trapezes mit abgerundeten Ecken auf. Der untere Luftkanal 9 weist eine Form auf, welche einem Rechteck mit abgerundeten Ecken ähnelt, bei welchem die untere, rechte Ecke abgeschnitten wurde, wodurch sich eine fünfeckige Form ergibt, welche kein reguläres Fünfeck ist. Im Fußbereich 5 befindet sich eine Halte-Noppe 8, deren Form einem Trapez mit abgerundeten Ecken ähnelt und welche sich fast über die gesamte Breite des Fußbereichs 5 bzw. der Profildichtung erstreckt. Die Halte-Noppe 8 umfasst in ihrem inneren teilweise die drei unteren Luftkanäle 9, wobei sich die drei unteren Luftkanäle 9 auch in den Bereich oberhalb der Halte-Noppe 8 erstrecken.

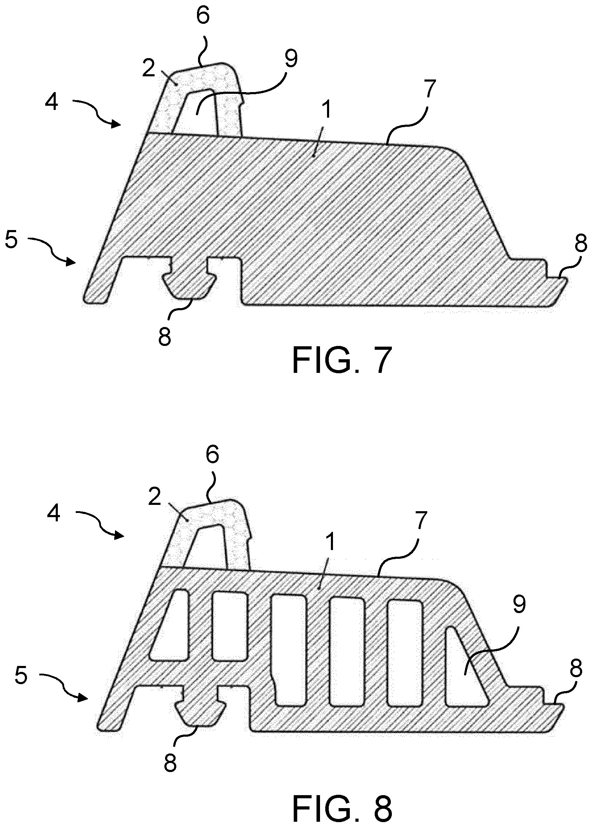

**Figur 7** zeigt eine Seitenansicht eines Querschnitts einer Mitteldichtung gemäß einer weiteren Ausführungsform der Erfindung, welche der in Figur 1 gezeigten Ausführungsform ähnelt. Im Unterschied zu der in Figur 1 gezeigten Ausführungsform ist die Anlageschulter 6 dieser Ausführungsform aus einem Moosgummi 2 oder einer Moosgummi-Mischung 2 gefertigt. Der mit Wabenmuster schraffierte Bereich entspricht dem Teil der Mitteldichtung, welcher aus dem Moosgummi 2 oder einer Moosgummi-Mischung 2 besteht. Zudem weist die Anlageschulter 6 einen Luftkanal 9 auf. Der Luftkanal 9 befindet sich innerhalb der Anlageschulter 6 im Kopfbereich 4 der Profildichtung und weist die Form eines Trapezes mit abgerundeten Ecken und schräger Oberseite auf. Der Rest der Profildichtung ist aus der erfindungsgemäßen Elastomerzusammensetzung 1 gefertigt.

**Figur 8** zeigt eine Seitenansicht eines Querschnitts einer Mitteldichtung gemäß einer weiteren Ausführungsform der Erfindung. Die gezeigte Ausführungsform ähnelt der in Figur 7 gezeigten Ausführungsform. Im Unterschied zu der in Figur 7 gezeigten Ausführungsform weist diese Ausführungsform im Bereich unterhalb der Anlageschulter 6 zwei Luftkanäle 9 auf und im Bereich unterhalb des Mittelstegs 7 vier Luftkanäle 9. Die Form und Lage der Luftkanäle 9 dieser Ausführungsform entspricht dabei der Form und Lage der Luftkanäle 9 der in Figur 5 gezeigten Ausführungsform. Im Unterschied zu der in Figur 5 gezeigten Ausführungsform ist die Anlageschulter 6 dieser Ausführungsform aus einem Moosgummi 2 oder einer Moosgummi-Mischung 2 gefertigt. Der mit Wabenmuster schraffierte Bereich entspricht dem Teil der Mitteldichtung, welcher aus einem Moosgummi 2 oder einer Moosgummi-Mischung 2 gefertigt ist.

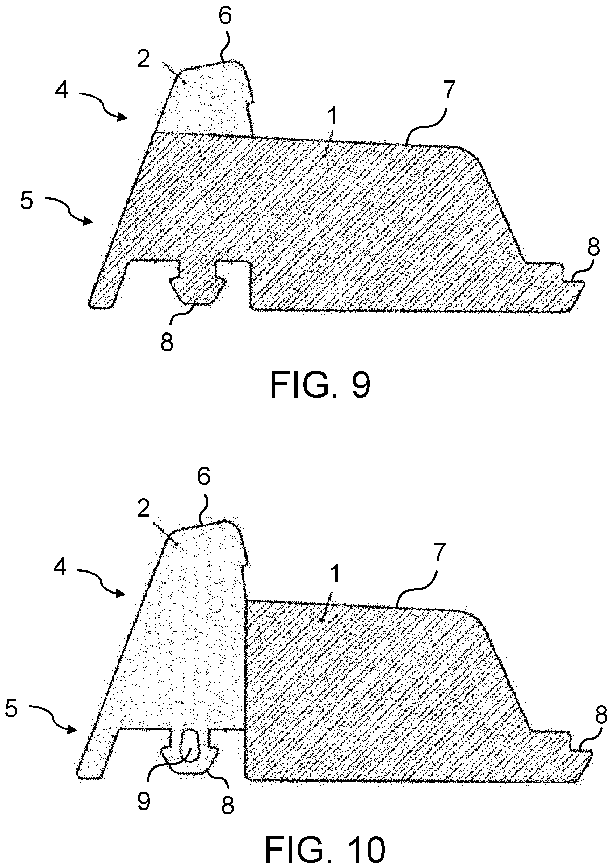

**Figur 9** zeigt eine Seitenansicht eines Querschnitts einer Mitteldichtung gemäß einer weiteren Ausführungsform der Erfindung. Die Profildichtung ähnelt den in Figur 1 oder Figur 7 gezeigten Ausführungsformen. Im Unterschied zu der in Figur 1 gezeigten Ausführungsform ist die Anlageschulter 6 dieser Ausführungsform aus einem Moosgummi 2 oder einer Moosgummi-Mischung 2 gefertigt. Im Unterschied zu der in Figur 7 gezeigten Ausführungsform weist die Anlageschulter 6 dieser Ausführungsform keinen Luftkanal 9 auf. Die Profildichtung weist keine Luftkanäle 9 auf.

**Figur 10** zeigt eine Seitenansicht eines Querschnitts einer Mitteldichtung gemäß einer weiteren Ausführungsform der Erfindung. Diese Ausführungsform ähnelt der in Figur 9 gezeigten Ausführungsform. Im Unterschied zu der in Figur 9 gezeigten Ausführungsform ist bei dieser Ausführungsform aber nicht nur die Anlageschulter 6 aus einem Moosgummi 2 oder einer Moosgummi-Mischung 2 gefertigt, sondern auch der Bereich der Profildichtung, welcher sich unterhalb der Anlageschulter 6 befindet und sich bis in den Fußbereich 5 erstreckt. Die Profildichtung weist genau einen Luftkanal 9 auf. Der eine Luftkanal 9 hat eine elliptische Form, wobei die Ellipse so angeordnet ist, dass sie sich in vertikaler Richtung erstreckt. Der eine Luftkanal 9 befindet sich im Fußbereich 5 in einer Halte-Noppe 8, welche in dem Bereich des Fußbereichs 5, welcher sich unterhalb der Anlageschulter 6 befindet, angeordnet ist.

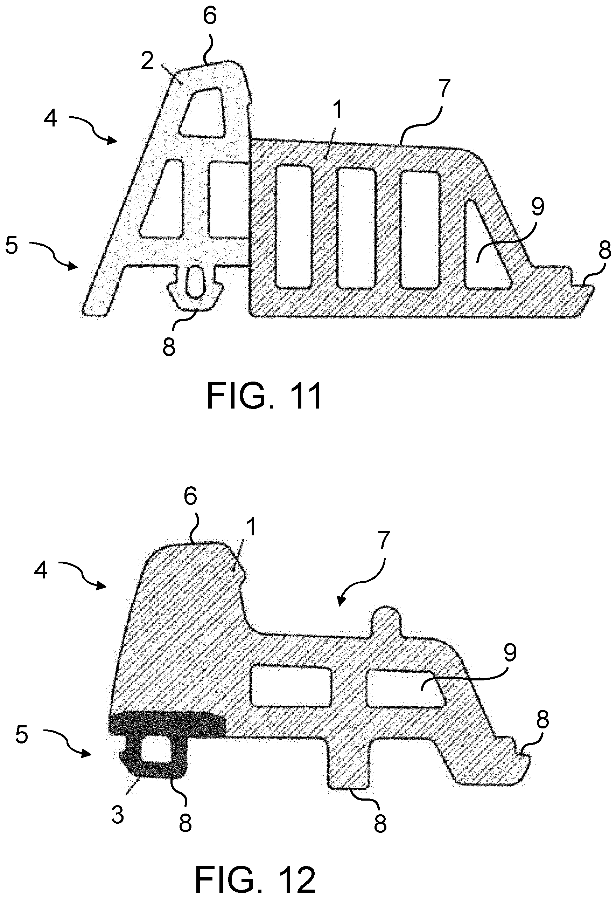

**Figur 11** zeigt eine Seitenansicht eines Querschnitts einer Mitteldichtung gemäß einer weiteren Ausführungsform der Erfindung. Diese Ausführungsform ähnelt der in Figur 10 gezeigten Ausführungsform. Im Unterschied zu der in Figur 10 gezeigten Ausführungsform weist diese Ausführungsform neben dem einem Luftkanal 9 in der Halte-Noppe 8 noch weitere, zusätzliche Luftkanäle 9 in der Anlageschulter 6, in dem Bereich unterhalb der Anlageschulter 6 und in dem Bereich unterhalb des Mittelstegs 7 auf, wobei die Form und Lage der zusätzlichen Luftkanäle 9 der Form und Lage der Luftkanäle 9 der in Figur 5 und Figur 8 gezeigten Ausführungsformen entsprechen.

**Figur 12** zeigt eine Seitenansicht eines Querschnitts einer Mitteldichtung gemäß einer weiteren Ausführungsform der Erfindung. Die Profildichtung weist eine Anlageschulter 6 auf, welche keinen Luftkanal 9 aufweist. Die Profildichtung weist einen Mittelsteg 7 auf, welcher eine nahezu halbkreisförmige Erhebung aufweist. In dem Bereich unterhalb des Mittelstegs 7 befinden sich zwei Luftkanäle 9, welche nebeneinander angeordnet sind. Der Luftkanal 9, welcher sich näher an der Anlageschulter 6 befindet, weist die Form eines Rechtecks mit abgerundeten Ecken auf, wohingegen der andere Luftkanal 9 die Form eines Trapezes mit abgerundeten Ecken aufweist. Im Fußbereich 5, in dem Bereich unterhalb der Anlageschulter 6 befindet sich eine Halte-Noppe 8, welche aus einem Weichgummi 3 oder einer Weichgummi-Mischung 3 gefertigt ist. Der schwarz gefüllte Bereich der Figur entspricht dem Teil der Mitteldichtung, welcher aus dem Moosgummi 2 oder einer Moosgummi-Mischung 2 besteht. Die Halte-Noppe 8 weist einen Luftkanal 9 auf, dessen Form einem Rechteck mit abgerundeten Ecken entspricht, wobei die oberen Ecken stärker abgerundet sind, als die unteren. Im Fußbereich 5 der Profildichtung befindet sich mittig angeordnet eine weitere Halte-Noppe 8 ohne Luftkanal 9, wobei diese Halte-Noppe 8, aus der erfindungsgemäßen Elastomerzusammensetzung 1 besteht und die Form eines Rechtecks mit abgerundeten Ecken aufweist. Im Fußbereich 5, auf der Seite, welche der aus Weichgummi 3 oder Weichgummi-Mischung 3 gefertigten Halte-Noppe 8 gegenüberliegt, befindet sich ein weiterer Haltebereich 8 ohne Luftkanal 9. Dieser Haltebereich 8 weist eine rechteckige und eine Trapez-ähnliche Erhebung auf.

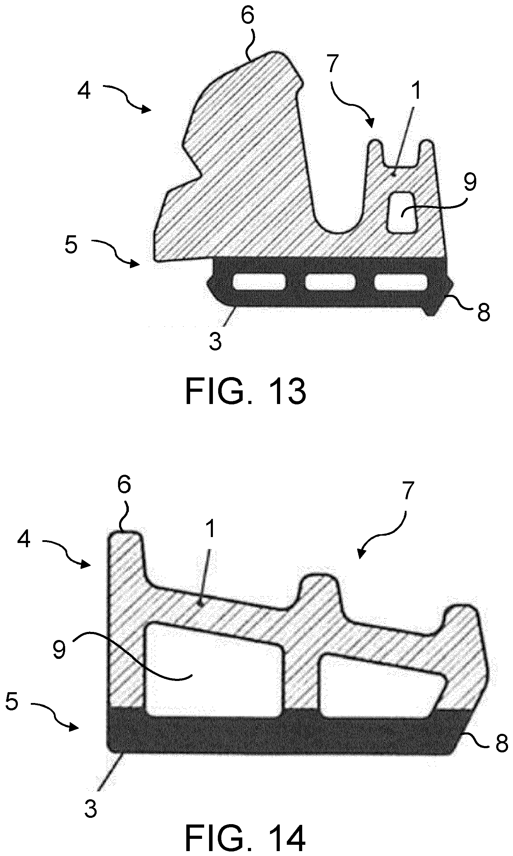

**Figur 13** zeigt eine Seitenansicht eines Querschnitts einer Mitteldichtung gemäß einer weiteren Ausführungsform der Erfindung. Die Profildichtung weist eine Anlageschulter 6 und einen Mittelsteg 7 auf. Die Profildichtung weist in dem Bereich unterhalb der Anlageschulter 6 auf der Seite, welche dazu ausgebildet ist, der Scheibe abgewandt und einem Rahmen zugewandt zu sein, eine Einmündung in Form eines Dreiecks auf. Die Anlageschulter 6 weist auf der Seite, welche dazu ausgebildet ist, einer Scheibe zugewandt zu sein, eine Einmündung auf. Diese Einmündung erstreckt sind bis in den Bereich unterhalb des Mittelstegs 7. Die Einmündung erstreckt sich vom Kopfbereich 4 bis in etwa zur Mitte des Fußbereichs 5 und befindet sich mittig angeordnet in der Profildichtung. Am unteren Ende weist die Einmündung eine halbkreisförmige Form auf. Der Mittelsteg 7 weist ferner zwei längliche Erhebungen mit halbkreisförmiger Oberseite auf. Unterhalb der zwei Erhebungen des Mittelstegs 7 befindet sich ein Luftkanal 9, welcher die Form eines Trapezes mit abgerundeten Ecken aufweist. Im Fußbereich 5 befindet sich ein Haltebereich 8, welcher aus einem Weichgummi 3 oder einer Weichgummi-Mischung 3 gefertigt ist und drei in etwa gleich große Luftkanäle 9 aufweist, welche die Form von Rechtecken mit abgerundeten Ecken aufweisen. Der Haltebereich 8 erstreckt sich fast über die gesamte Breite des Fußbereichs 5 bzw. der Profildichtung.

**Figur 14** zeigt eine Seitenansicht eines Querschnitts einer Mitteldichtung gemäß einer weiteren Ausführungsform der Erfindung. Die Profildichtung weist eine Anlageschulter 6 in Form eines Rechtecks mit abgerundeten Ecken und einen Mittelsteg 7 auf. Der Mittelsteg 7 weist zwei Erhebungen auf, welche die Form von Trapezen mit abgerundeten Ecken aufweisen. Eine Erhebung befindet sich mittig auf dem Mittelsteg 7 angeordnet. Die andere Erhebung befindet sich am Rand des Mittelstegs 7, auf der Seite, welche der Anlageschulter 6 gegenüberliegt. Im Fußbereich 5 befindet sich ein Haltebereich 8 mit flach ausgebildeter Unterseite. Der Haltebereich 8 ist aus Weichgummi 3 oder einer Weichgummi-Mischung 3 gefertigt und erstreckt sich über die gesamte Breite des Fußbereichs 5 bzw. der Profildichtung. Unterhalb des Mittelstegs 7 befinden sich zwei Luftkanäle 9, welche die Form von Trapezen mit abgerundeten Ecken und schräger Oberseite aufweisen. Die beiden Luftkanäle 9 erstrecken sich bis in den Fußbereich 5 und bis in den Haltebereich 8.

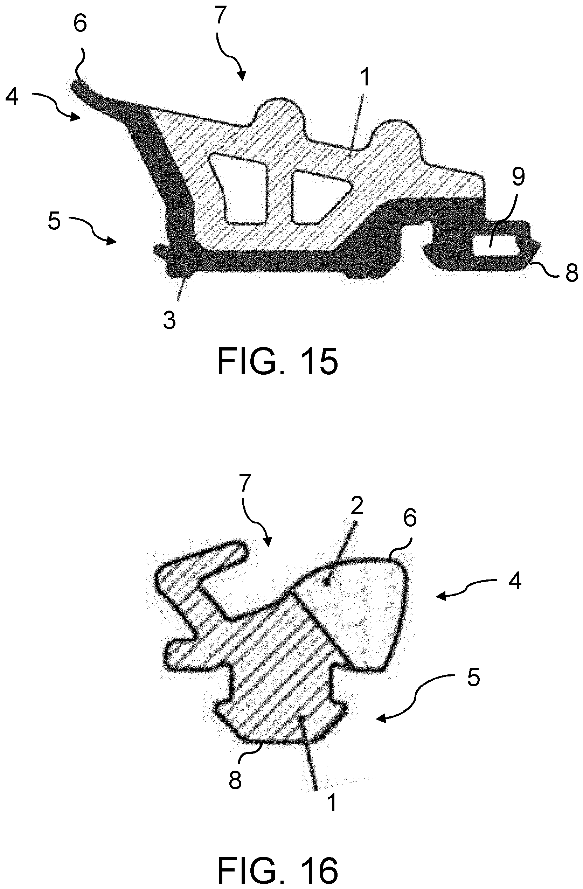

**Figur 15** zeigt eine Seitenansicht eines Querschnitts einer Mitteldichtung gemäß einer weiteren Ausführungsform der Erfindung. Die Profildichtung weist einen Mittelsteg 7 auf. Der Mittelsteg 7 weist zwei halbkreisförmige Erhebungen auf. Eine erste halbkreisförmige Erhebung befindet sich mittig auf dem Mittelsteg 7. Die zweite halbkreisförmige Erhebung befindet sich zwischen der ersten Erhebung und der Außenkante der Profildichtung, welche der Anlageschulter 6 gegenüberliegt. Die Profildichtung weist eine Anlageschulter 6 auf, welche eine Krümmung aufweist und flach, in einem Winkel von 180°, in den Mittelsteg 7 übergeht. Die Anlageschulter 6 ragt seitlich über den Rest der Profildichtung hinaus. In dem Bereich unterhalb des Mittelstegs 7 befinden sich zwei Luftkanäle 9. Der erste Luftkanal 9, welcher sich näher an der Seite der Anlageschulter 6 befindet, weist die Form eines Rechtecks mit abgerundeten Ecken auf, wobei die Seitenkante, welche der Außenkante der Profildichtung zugewandt ist, eine konkave Krümmung aufweist. Neben dem ersten Luftkanal 9 befindet sich ein zweiter Luftkanal 9. Der zweite Luftkanal 9 weist die Form eines Trapezes mit abgerundeten Ecken auf. Die Anlageschulter 6 ist aus Weichgummi 3 oder einer Weichgummi-Mischung 3 gefertigt. Ein äußerer Rand der Außenkante der Profildichtung, welche sich von der Anlageschulter 6 bis in den Fußbereich 5 und über die gesamte Breite des Fußbereichs 5 erstreckt, ist aus Weichgummi 3 oder einer Weichgummi-Mischung 3 gefertigt. Der Fußbereich 5 weist einen Haltebereich 8 auf, welcher aus Weichgummi 3 oder einer Weichgummi-Mischung 3 gefertigt ist und sich über die gesamte Breite des Fußbereichs 5 erstreckt. Der Haltebereich 8 weist an der Außenkante, welche sich auf derselben Seite befindet wie die Anlageschulter 6, eine halbkreisförmige Erhebung auf. Neben dieser Erhebung, an der Unterseite der Profildichtung, befindet sich eine weitere Erhebung, welche die Form eines Rechtecks mit abgerundeten Ecken aufweist. Im Fußbereich 5 unterhalb der zweiten Erhebung des Mittelstegs 7 befindet sich eine Erhebung, welche die Form eines Trapezes aufweist. Direkt neben dieser Erhebung befindet sich auf der Seite, welche von der Anlageschulter 6 abgewandt ist, eine Einmündung. Neben dieser Einmündung befindet sich eine Halte-Noppe 8, welche aus Weichgummi 3 oder einer Weichgummi-Mischung 3 gefertigt ist. Die Halte-Noppe 8 weist einen Luftkanal 9 auf, der die Form eines Rechtecks mit abgerundeten Ecken aufweist, wobei die Seitenkante des Rechtecks, welche der Außenkante der Profildichtung zugewandt ist, eine Krümmung aufweist.

**Figur 16** zeigt eine Seitenansicht eines Querschnitts einer Seitendichtung gemäß einer weiteren Ausführungsform der Erfindung. Die Profildichtung weist eine Anlageschulter 6 auf, welche aus einem Moosgummi 2 oder einer Moosgummi-Mischung 2 gefertigt ist, wobei auch der Bereich der Profildichtung unterhalb der Anlageschulter 6 aus Moosgummi 2 oder einer Moosgummi-Mischung 2 besteht. Die Profildichtung weist einen Mittelsteg 7 aus, welcher eine Einmündung aufweist. Der Mittelsteg 7 weist auch eine Erhebung auf. Die Erhebung ist wie ein Haken oder ein auf dem Kopf stehender Buchstabe "L" geformt. Mittig im Fußbereich 5 der Profildichtung befindet sich eine Halte-Noppe 8. Die Seitendichtung weist keine Luftkanäle 9 auf.

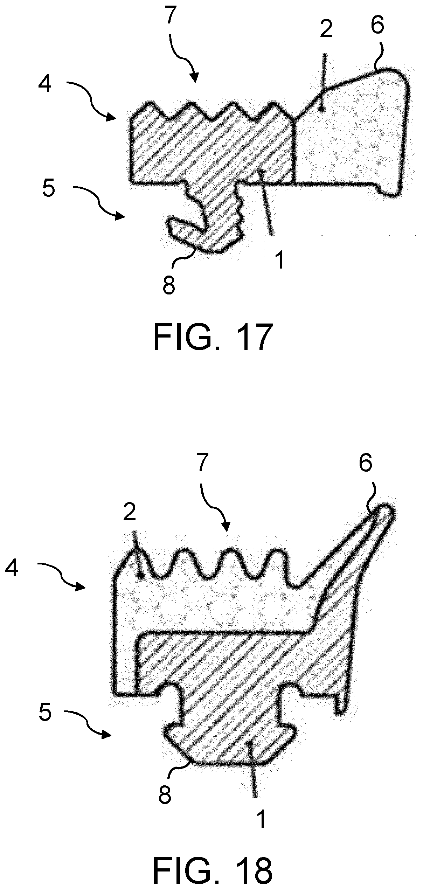

**Figur 17** zeigt eine Seitenansicht eines Querschnitts einer Seitendichtung gemäß einer weiteren Ausführungsform der Erfindung. Die Profildichtung weist eine Anlageschulter 6 und einen Bereich unter der Anlageschulter auf, welche aus Moosgummi 2 oder einer Moosgummi-Mischung 2 bestehen. Die Seitendichtung weist einen Mittelsteg 7 auf. Der Mittelsteg 7 weist vier Erhebungen in Form von Dreiecken auf. Im Fußbereich 5, mittig unterhalb des Mittelstegs 7 befindet sich ein Haltebereich 8, welcher die Form eines Hakens mit wellenförmiger Oberfläche aufweist, wobei der Haken so ausgerichtet ist, dass dieser von der Anlageschulter 6 weg zeigt.

**Figur 18** zeigt eine Seitenansicht eines Querschnitts einer Seitendichtung gemäß einer weiteren Ausführungsform der Erfindung. Die Profildichtung weist einen Mittelsteg 7 auf. Der Mittelsteg 7 weist wellenförmige Erhebungen auf. Eine der wellenförmigen Erhebungen erstreckt sich derart, dass sie einen oberen Teil der Anlageschulter 6 bildet. Der Mittelsteg 7, der Bereich unterhalb des Mittelstegs 7 im Kopfbereich 4 der Profildichtung, die wellenförmigen Erhebungen des Mittelstegs 7 und der obere Teil der Anlageschulter 6, sowie die Außenkante der Profildichtung, welche von der Anlageschulter 6 abgewandt ist, sind aus Moosgummi 2 oder einer Moosgummi-Mischung 2 gefertigt. Der untere Teil der Anlageschulter 6, und der Fußbereich 5 sind aus der erfindungsgemäßen Elastomerzusammensetzung 1 gefertigt. Der Fußbereich 5 weist mittig eine Halte-Noppe 8 auf. An der Außenkante der Profildichtung, auf deren Seite sich auch die Anlageschulter 6 befindet, befindet sich unten eine schmale Erhebung, welche sich in vertikaler Richtung erstreckt.

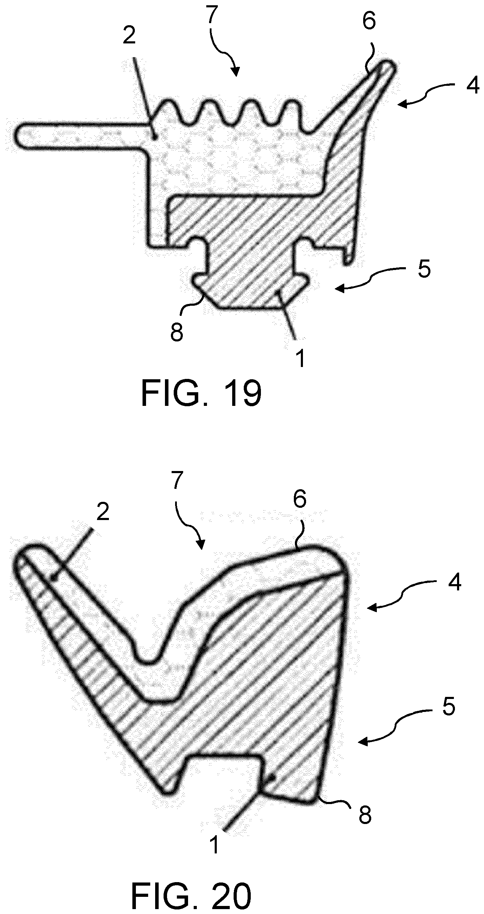

**Figur 19** zeigt eine Seitenansicht eines Querschnitts einer Seitendichtung gemäß einer weiteren Ausführungsform der Erfindung. Die Ausführungsform ähnelt der in Figur 18 gezeigten Ausführungsform. Im Unterschied zu der in Figur 18 gezeigten Ausführungsform, weist diese Ausführungsform an der Außenkante, welche von der Anlageschulter 6 abgewandt ist, eine Erhebung aus Moosgummi 2 oder einer Moosgummi-Mischung 2 auf. Die Erhebung hat eine längliche Form mit halbkreisförmiger Spitze und erstreckt sich in horizontaler Richtung, sodass die Erhebung seitlich über die Profildichtung hinausragt.

**Figur 20** zeigt eine Seitenansicht eines Querschnitts einer Seitendichtung gemäß einer weiteren Ausführungsform der Erfindung. Die Profildichtung weist einen Mittelsteg 7 auf. Der Mittelsteg 7 weist eine Einmündung in Form eines Dreiecks auf, welche sich über die gesamte Breite des Mittelstegs 7 erstreckt. Die Einmündung erstreckt sich bis in den unteren Kopfbereich 4 und fast bis in den Fußbereich 5 der Profildichtung. Die Anlageschulter 6, der Mittelsteg 7 und der äußere Rand der Einmündung des Mittelstegs 7 ist aus Moosgummi 2 oder einer Moosgummi-Mischung 2 gefertigt. Der Bereich unterhalb der aus Moosgummi 2 oder Moosgummi-Mischung 2 gefertigten Bereiche ist aus der erfindungsgemäßen Elastomerzusammensetzung 1 gefertigt. Der Fußbereich 5 weist einen Haltebereich 8 auf. Im Fußbereich 5 unterhalb der Anlageschulter 6 befindet sich eine Halte-Noppe 8 in Form eines Trapezes mit abgerundeten Ecken, wohingegen sich auf der gegenüberliegenden Seite eine Halte-Noppe 8 in Form eines abgerundeten Dreiecks befindet.

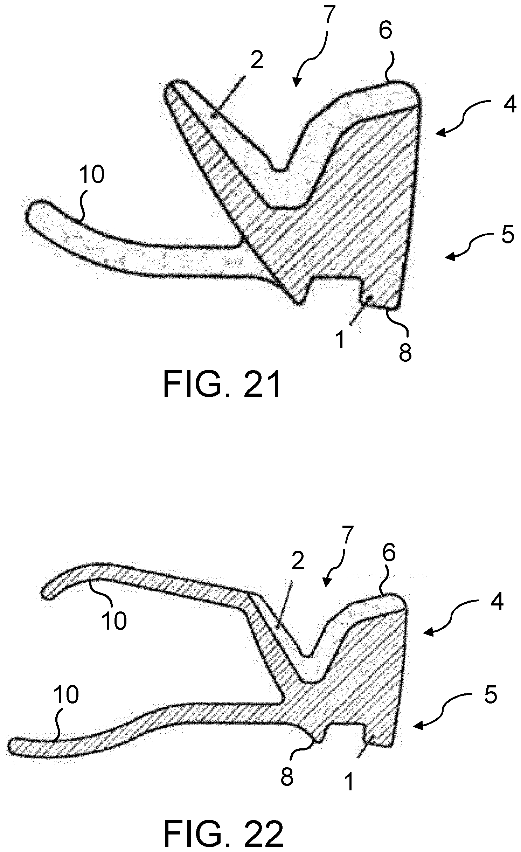

**Figur 21** zeigt eine Seitenansicht eines Querschnitts einer Seitendichtung gemäß einer weiteren Ausführungsform der Erfindung. Die gezeigte Ausführungsform ähnelt der in Figur 20 gezeigten Ausführungsform. Im Unterschied zu der in Figur 20 gezeigten Ausführungsform ist im Fußbereich 5 dieser Ausführungsform eine Halterung 10 angebracht, welche aus Moosgummi 2 oder einer Moosgummi-Mischung 2 gefertigt ist. Die Halterung 10 ist auf der Außenkante der Profildichtung angebracht, welche von der Anlageschulter 6 abgewandt ist und weist eine längliche Form mit halbkreisförmiger Spitze auf, welche seitlich über den Rest der Profildichtung hinausragt.

**Figur 22** zeigt eine Seitenansicht eines Querschnitts einer Seitendichtung gemäß einer weiteren Ausführungsform der Erfindung. Die gezeigte Ausführungsform ähnelt der in Figur 20 gezeigten Ausführungsform. Im Unterschied zu der in Figur 20 gezeigten Ausführungsform weist diese Ausführungsform zwei weitere Halterungen 10, welche aus der erfindungsgemäßen Elastomerzusammensetzung 1 bestehen, auf. Beide Halterungen 10 sind aus auf der Außenkante der Profildichtung angebracht, welche von der Anlageschulter 6 abgewandt ist, wobei eine Halterung 10 im Kopfbereich 4 und die andere im Fußbereich 5 angebracht ist. Beide Halterungen 10 weisen eine längliche Form mit halbkreisförmiger Spitze auf, welche seitlich über den Rest der Profildichtung hinausragt.

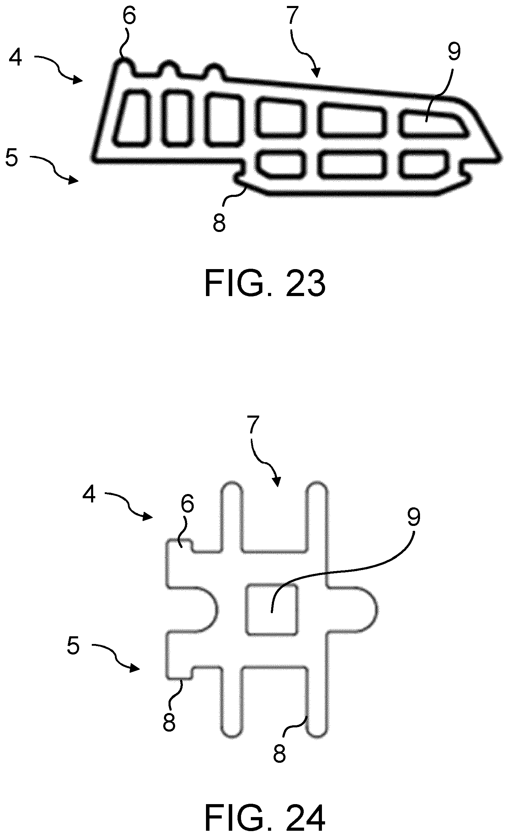

**Figur 23** zeigt eine Seitenansicht eines Querschnitts eines Dämmstreifens gemäß einer Ausführungsform der Erfindung. Die Profildichtung weist einen überwiegend flachen Mittelsteg 7 mit zwei halbkreisförmigen Erhebungen auf. Die Profildichtung weis eine Anlageschulter 6 auf, welche sich neben dem Mittelsteg 7 befindet und eine halbkreisförmige Form aufweist. Die Außenkanten der Profildichtung sind schräg angeordnet, sodass die Profildichtung in Richtung des Fußbereichs 5 breiter wird. Der Fußbereich 5 weist in dem Bereich unterhalb des Mittelstegs 7 einen Haltebereich 8. Der Haltebereich 8 ist als Halte-Noppe ausgebildet, welche die Form eines Rechtecks, an dessen Unterseite sich ein Trapez befindet, aufweist. Die Profildichtung weist neun Luftkanäle 9 auf. Ein erster Luftkanal 9 befindet sich unterhalb der Anlageschulter 6 und weist die Form eines Trapezes mit abgerundeten Ecken auf. Neben dem ersten Luftkanal 9 und unterhalb des Mittelstegs 7 ist ein zweiter Luftkanal 9 angeordnet, welcher die Form eines Rechtecks mit abgerundeten Ecken aufweist. Neben dem zweiten Luftkanal 9 und unterhalb des Mittelstegs 7 befinden sich ein dritter, vierter und fünfter Luftkanal 9. Der dritte, vierte und fünfte Luftkanal 9 weisen die Form eines Rechtecks mit schräger Oberseite bzw. schräger Oberkante und abgerundeten Ecken auf. Neben dem fünften Luftkanal 9 und unterhalb des Mittelstegs 7 befindet sich ein sechster Luftkanal 9, welcher die Form eines Trapezes mit abgerundeten Ecken aufweist. Im Fußbereich 5 der Profildichtung befinden sich ein siebter, ein achter und ein neunter Luftkanal 9, welche sich bis in den Haltebereich 8 erstrecken. Der siebte Luftkanal 9 befindet sich unterhalb des vierten Luftkanals 9, der achte Luftkanal 9 befindet sich unterhalb des fünfen Luftkanals 9 und der neunte Luftkanal 9 befindet sich unterhalb des sechsten Luftkanals 9. Der siebte und der neunte Luftkanal 9 weisen eine Form auf, welche einem Rechteck mit abgerundeten Ecken ähnelt, bei welchem die untere, linke bzw. rechte Ecke abgeschnitten wurde, wodurch sich eine fünfeckige Form ergibt, welche kein reguläres Fünfeck ist. Der achte Luftkanal 9, welcher sich zwischen dem siebten und dem neunten Luftkanal 9 befindet, weist die Form eines Rechtecks mit abgerundeten Ecken auf.

**Figur 24** zeigt eine Seitenansicht eines Querschnitts eines Dämmstreifens gemäß einer weiteren Ausführungsform der Erfindung. Die Profildichtung weist eine Anlageschulter 6 in Form eines Rechtecks auf. Der Mittelsteg 7 weist zwei Erhebungen auf, welche sich senkrecht zu dem Mittelsteg 7 erstrecken. Unterhalb des Mittelstegs 7 befindet sich ein rechteckiger Luftkanal 9. Unterhalb der Anlageschulter 6 befindet sich eine Einmündung, welche die Form einer halben Ellipse aufweist. Auf der gegenüberliegenden Seite der Profilichtung befindet sich eine Erhebung in Form einer halben Ellipse, welche zu der Form der Einmündung deckungsgleich ist. Im Fußbereich 5 der Profildichtung befindet sich unterhalb der Anlageschulter 6 ein Haltebereich 8 in Form eines Rechtecks, wobei die Form des Haltebereichs 8 deckungsgleich zu der Form der Anlageschulter 6 ist. Im Fußbereich 5 unterhalb der Erhebungen des Mittelstegs 7 befinden sich zwei Haltebereiche 8, welche sich senkrecht aus dem Fußbereich 5 erstrecken und deren Form deckungsgleich zu der Form der Erhebungen des Mittelstegs 7 sind. Die Form des Querschnitts der Profildichtung ist spiegelsymmetrisch zu einer horizontalen Spiegelachse.

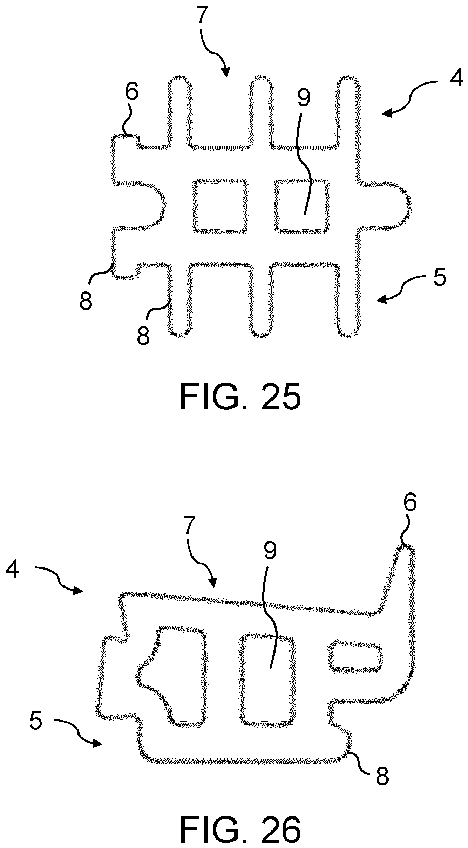

**Figur 25** zeigt eine Seitenansicht eines Querschnitts eines Dämmstreifens gemäß einer Ausführungsform der Erfindung. Die gezeigte Ausführungsform ähnelt der in Figur 24 gezeigten Ausführungsform. Im Unterschied zu der in Figur 24 gezeigten Ausführungsform weist diese Ausführungsform im Kopfbereich 4 drei Erhebungen im Bereich des Mittelstegs 7 auf und im Fußbereich 5 drei Haltebereiche 8 auf, welche sich senkrecht erstrecken und deren Form deckungsgleich zu der Form der Erhebungen des Mittelstegs 7 sind. Die Profildichtung weist zwei rechteckige Luftkanäle 9 auf.

**Figur 26** zeigt eine Seitenansicht eines Querschnitts eines Dämmstreifens gemäß einer weiteren Ausführungsform der Erfindung. Die Profildichtung weist einen flachen Mittelsteg 7 auf. Die Anlageschulter 6 weist die Form eines Dreiecks mit abgerundeten Ecken auf. Die der Anlageschulter 6 gegenüberliegende Außenkante der Profildichtung ist schräg angeordnet, sodass die die Profildichtung in Richtung des Fußbereichs 5 schmäler wird. Die der Anlageschulter 6 gegenüberliegende Außenkante der Profildichtung weist eine Erhebung in Form eines Trapezes mit abgerundeten Ecken auf. Im Fußbereich 5 weist die Profildichtung einen Haltebereich 8 auf, welcher sich fast über die gesamte Breite des Fußbereichs 5 bzw. der Profildichtung erstreckt. Die Profildichtung weist drei Luftkanäle 9 unterhalb des Mittelstegs 7 auf, welche nebeneinander angeordnet sind. Der der erste Luftkanal 9, der sich in der Nähe der Anlageschulter befindet, und der zweite Luftkanal, welcher den mittleren Luftkanal bildet, weisen die Form eines Rechtecks mit schräger Oberseite und abgerundeten Ecken auf. Der dritte Luftkanal 9 ist auf der der Anlageschulter gegenüberliegenden Seite der Profildichtung angeordnet. Der dritte Luftkanal weist die Form eines Rechtecks mit abgerundeten Ecken auf, wobei die beiden Ecken, welche sich nahe der Außenkante der Profildichtung befinden, jeweils eine Einmündung in Form eines Viertelkreises aufweisen.

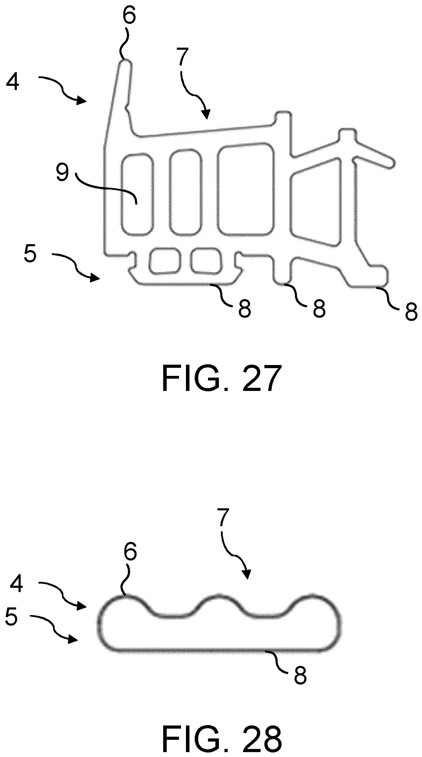

**Figur 27** zeigt eine Seitenansicht eines Querschnitts eines Dämmstreifens gemäß einer Ausführungsform der Erfindung. Die Profildichtung weist einen überwiegend flachen Mittelsteg 7 mit zwei Erhebungen in Form von Rechtecken mit abgerundeten Ecken auf. Der Mittelsteg 7 weist eine Einmündung in Form eines Dreiecks bzw. eines halben Trapezes mit abgerundeten Ecken auf. Die Profildichtung weist eine schmale Anlageschulter 6 mit abgerundeter Oberseite auf, welche sich beinahe senkrecht bzw. leicht schräg aus dem Mittelsteg 7 erstreckt. Die der Anlageschulter abgewandte Außenkante der Profildichtung weist eine Erhebung auf, welche sich schräg aus der Außenkante der Profildichtung erstreckt. Unterhalb des Mittelstegs 7 sind ein erster, ein zweiter, ein dritter und ein vierter Luftkanal 9 angeordnet, wobei sich die Luftkanäle 9 von dem Kopfbereich 4 der Profildichtung bis in den Fußbereich der Profildichtung erstrecken. Der erste Luftkanal 9, welche sich unterhalb der Anlageschulter befindet und der zweite Luftkanal 9, welcher neben dem ersten Luftkanal 9 angeordnet ist, weisen die Form eines Rechtecks mit abgerundeten Ecken auf. Der dritte Luftkanal 9, welcher sich neben dem zweiten Luftkanal 9 befindet, weist die Form eines Rechtecks mit schräger Oberseite und abgerundeten Ecken auf. Der vierte Luftkanal 9, welcher sich neben dem dritten Luftkanal 9 befindet, weist die Form eines Trapezes mit abgerundeten Ecken auf. Der Fußbereich 5 der Profildichtung weist einen als Halte-Noppe ausgebildeten Haltebereich 8 auf, welcher die Form eines Rechtecks, an dessen Unterseite sich ein Trapez befindet, aufweist. Innerhalb dieser Halte-Noppe sind zwei Luftkanäle 9 nebeneinander angeordnet, welche die Form von Rechtecken mit abgerundeten Ecken aufweisen. Der Fußbereich 5 weist ferner auf der gegenüberliegenden Seite einen weiteren Haltebereich 8 auf, welcher eine rechteckige Erhebung umfasst. Zwischen den bereits genannten Haltebereichen 8 ist ein weiterer Haltebereich 8 angeordnet, welcher die Form eines abgerundeten Recktecks aufweist.

**Figur 28** zeigt eine Seitenansicht eines Querschnitts eines Dämmstreifens gemäß einer Ausführungsform der Erfindung. Die Profildichtung weist eine halbkreisförmige Anlageschulter 6 auf. Die Profildichtung weist einen Mittelsteg 7 mit zwei halbkreisförmigen Erhebungen auf. Der Haltebereich 8 im Fußbereich 5 der Profildichtung ist flach ausgebildet. Die Profildichtung weist keine Luftkanäle 9 auf.

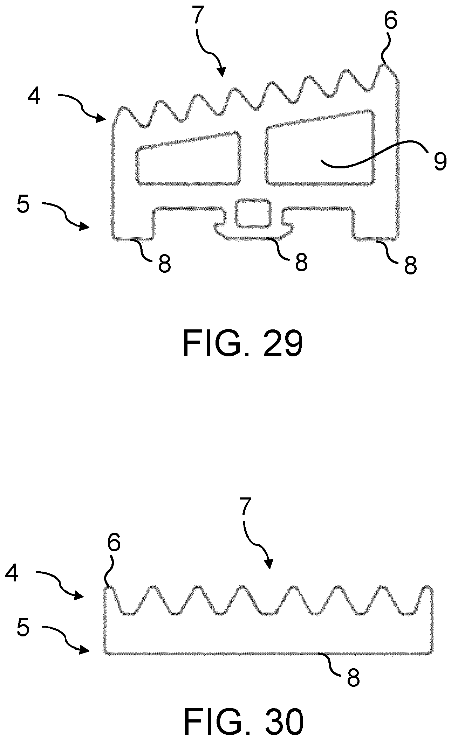

**Figur 29** zeigt eine Seitenansicht eines Querschnitts eines Dämmstreifens gemäß einer Ausführungsform der Erfindung. Die Profildichtung weist einen Mittelsteg 7 mit nebeneinander angeordneten Erhebungen in Form von Dreiecken mit abgerundeten Ecken auf. Die Profildichtung weist eine Anlageschulter 6 auf, welche sich nicht wesentlich von den Erhebungen des Mittelstegs 7 unterscheidet. Unterhalb des Mittelstegs 7 befinden sich zwei nebeneinander angeordnete Luftkanäle 9. Die Luftkanäle weisen die Form von Rechtecken mit schräger Oberseite und abgerundeten Ecken auf, welche sich vom Kopfbereich 4 bis in den Fußbereich 5 der Profildichtung erstrecken. Im Fußbereich 5 befinden zwei rechteckige Haltebereiche 8, wobei je einer der Haltebereiche 8 an einer Außenkante der Profildichtung angeordnet ist. Zwischen diesen beiden an den Außenkanten angeordneten Haltebereichen 8 befindet sich mittig angeordnet ein mittlerer Haltebereich 8. Der mittlere Haltebereich 8 ist als Halte-Noppe ausgebildet, welche die Form eines Rechtecks, an dessen Unterseite sich ein Trapez befindet, aufweist. Im Fußbereich 5, unterhalb der zwei nebeneinander angeordneten Luftkanäle 9 befindet sich mittig angeordnet ein weiterer Luftkanal 9, welcher die Form eines Rechtecks mit abgerundeten Ecken aufweist, welcher sich bis in den mittleren Haltebereich 8 erstreckt.

**Figur 30** zeigt eine Seitenansicht eines Querschnitts eines Dämmstreifens gemäß einer weiteren Ausführungsform der Erfindung. Die Profildichtung weist einen Mittelsteg 7 mit nebeneinander angeordneten Erhebungen in Form von Dreiecken mit abgerundeten Ecken auf. An den Außenkanten der Profildichtung weist der Mittelsteg 7 eine im Vergleich zu den übrigen Erhebungen schmälere Erhebung bzw. eine schmale Anlageschulter 6 auf. Der Haltebereich 8 im Fußbereich 5 der Profildichtung ist flach ausgebildet. Die Außenkanten der Profildichtung verlaufen senkrecht zu dem Haltebereich.

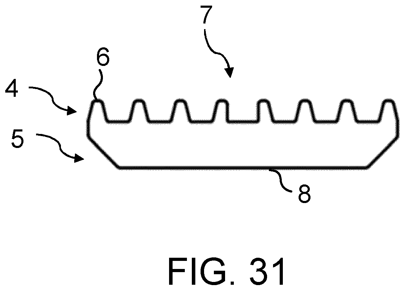

**Figur 31** zeigt eine Seitenansicht eines Querschnitts eines Dämmstreifens gemäß einer Ausführungsform der Erfindung. Die Profildichtung weist einen Mittelsteg 7 mit Erhebungen in Form von Trapezen mit abgerundeten Ecken auf. Die Profildichtung weist eine Anlageschulter 6 auf, welche sich nicht wesentlich von den Erhebungen des Mittelstegs 7 unterscheidet. Im Fußbereich 5 verlaufen die Außenkanten der Profildichtung schräg, sodass die Profildichtung in Richtung des Haltebereichs 8 schmäler wird. Der Haltebereich 8 ist flach ausgebildet.

Die Erfindung betrifft auch eine Verwendung der erfindungsgemäßen Profildichtung zur Wärmedämmung, bevorzugt zur Wärmedämmung im Baubereich, insbesondere als Mitteldichtung, Seitendichtung und/oder Dämmstreifen, zum Beispiel in Fensterrahmen oder Türrahmen. Die Profildichtung kann zur Wärmedämmung von Fenstern und Türen, insbesondere von Gebäudefenstern und Gebäudetüren, verwendet werden. Die Profildichtungen, insbesondere die Dämmstreifen, können individuell an die jeweiligen Profile bzw. Profilsysteme, insbesondere an Aluminium-Fenstersysteme und/oder Aluminium Türsysteme, angepasst werden.

Alle Vorteile und Merkmale der erfindungsgemäßen Profildichtung lassen sich analog auf die Verwendung der Profildichtung übertragen, und umgekehrt.

Die nachfolgenden Beispiele dienen der weiteren Erläuterung der Erfindung, ohne die Erfindung darauf zu beschränken.

### Beispiele

### Beispiel 1:

Gemäß einem ersten Ausführungsbeispiel weist die Werkstoffmischung folgende Zusammensetzung auf:
100 phr EPDM
132 phr Ruß N772
20 phr Kreide
93,5 phr Weichmacher
7 phr Vaseline
3 phr Aflux 42
5 phr Faktis F10
8 phr Calciumoxid
1 phr Stearinsäure
5 phr Zinkoxid
0,5 phr MBT
2 phr TMTD
1,5 phr Schwefel
35 phr Expancel 930 DU 120.

Die oben genannte Werkstoffmischung wird in einer Ultrahochfrequenz (UHF) Anlage mit ultrahochfrequenten Mikrowellen und mit Heißluft bei einer Temperatur von 200-270 °C behandelt. Durch Vulkanisation der Werkstoffmischung wird ein Werkstoff aus einer Elastomerzusammensetzung erhalten. Die Profildichtung, welche aus dem Werkstoff besteht, weist eine Dichte von 0,178 g/cm³ und eine Wärmeleitfähigkeit λ = 0,044 W/(m·K) auf. Der erfindungsgemäß hergestellte Werkstoff weist nach ISO 3386 eine Stauchhärte von 410 bis 490 kPa, insbesondere 462,0 kPa, bei einer Kompression von 25 %, 790 kPa bis 870 kPa, insbesondere 836,8 kPa bei einer Kompression von 40 % und 1220 kPa bis 1320 kPa, insbesondere 1284,0 kPa, bei einer Kompression von 50 % auf. Der Werkstoff weist nach ISO 8 15 einen Druckverformungsrest von 50 % bei einer Kompression von 25 % bei 70 °C für 24 Stunden auf, einen Druckverformungsrest von 33 % bei einer Kompression von 25 % bei 23 °C für 24 Stunden und einen Druckverformungsrest von 60 % bei einer Kompression von 25 % für 24 Stunden bei -10 °C.

### Beispiel 2:

Gemäß einem zweiten Ausführungsbeispiel werden in der oben genannten Werkstoffmischung 20 phr Expancel 930 DU 120 eingesetzt. Die Profildichtung, bestehend aus dem Werkstoff aus der Elastomerzusammensetzung, weist eine Dichte von 0,252 g/cm³ und eine Wärmeleitfähigkeit λ = 0,056 W/(m·K) auf. Der Werkstoff, welcher durch Vulkanisation der Werkstoffmischung erhalten wurde, weist nach ISO 3386 eine Stauchhärte von 850 kPa , insbesondere 892,0 kPa, bei einer Kompression von 25 %, 1580 kPa bis 1660 kPa, insbesondere 1623,0 kPa, bei einer Kompression von 50 % und 2490 kPa bis 2560 kPa, insbesondere 2535,0 kPa, bei einer Kompression von 50 % auf. Der Werkstoff weist nach ISO 8 15 einen Druckverformungsrest von 52 % bei einer Kompression von 25 % für 24 Stunden bei 70 °C, einen Druckverformungsrest von 28 % bei einer Kompression von 25 % für 24 Stunden bei 23 °C und einen Druckverformungsrest von 55 % bei einer Kompression von 25 % für 24 Stunden bei -10 °C auf.

### Beispiele 3, 4 und 5:

In den Beispielen 3 - 5 wurde die Zusammensetzung des Beispiels 1 gewählt, wobei der Anteil an Expancel variabel gestaltet wurde, und es wurde in diesen Beispielen zusätzlich ein chemisches Treibmittel (OBSH) eingesetzt. Die Zusammensetzungen sind wie folgt:
100 phr EPDM
132 phr Ruß N772
20 phr Kreide (heller Füllstoff)
93,5 phr Öl (Weichmacher)
7 phr Vaseline (Verarbietungshilfsmittel)
3 phr Aflux 42 (Fettalkohol + Fettsäureester Verarbeitungshilfsmittel)
5 phr Faktis F10 (Verarbeitungshilfsmittel)
8 phr Kalziumoxid (Trocknungsmittel)
1 phr Stearinsäure (Vulkanisationssystem (Aktivator) und Verarbeitungshilfsmittel)
5 phr Zinkoxid (Vulkanisationsssytem (Aktivator)).
0,5 phr MBT (Vulkanisationssystem (Beschleuniger))
2 phr TMTD (Vulkanisationssystem (Beschleuniger))
1,5 phr Schwefel (Vulkanisationssystem (Vulkanisationsmittel))

Variabel für die Beispiele 3 - 5:
Beispiel 3: 20 phr Expancel 930 DU 120 (expandiebare Micorspheres) + 7 phr OBSH (chemisches Treibmittel)
Beispiel 4: 30 phr Expancel 930 DU 120 (expandiebare Micorspheres) + 7 phr OBSH (chemisches Treibmittel)
Beispiel 5: 40 phr Expancel 930 DU 120 (expandiebare Micorspheres) + 7 phr OBSH (chemisches Treibmittel)

Die Umsetzungen erfolgten wie im Beispiel 1 beschrieben und die Vulkanisation mit Heißluft bei 200 °C. Folgende Dichten der hergestellten Profildichtungen wurden erhalten:
Beispiel 3: 0,24 g/cm3
Beispiel 4: 0,19 g/cm3
Beispiel 5: 0,12 g/cm3

### Bezugszeichenliste:

- 1: Elastomerzusammensetzung
- 2: Moosgummi oder Moosgummi-Mischung
- 3: Weichgummi oder Weichgummi-Mischung
- 4: Kopfbereich
- 5: Fußbereich
- 6: Anlageschulter
- 7: Mittelsteg
- 8: Haltebereich
- 9: Luftkanal
- 10: Halterung

## Patentansprüche

1. Profildichtung, insbesondere für Fenster und Türen,
aus einer Elastomerzusammensetzung (1), umfassend:
100 phr Elastomer und
25-40 phr expandierte Mikrokugeln,
wobei der mittlere Durchmesser der expandierten Mikrokugeln 10-200 µm beträgt und die Elastomerzusammensetzung (1) eine Dichte von 0,10-0,30 g/cm³ aufweist.

2. Profildichtung nach Anspruch 1, **dadurch gekennzeichnet, dass** die Elastomerzusammensetzung (1) eine Dichte von 0,12-0,28 g/cm³ aufweist.

3. Profildichtung nach einem der vorhergehenden Ansprüche, **dadurch gekennzeichnet, dass** die Elastomerzusammensetzung (1) zusätzlich
10-150 phr Weichmacher
20-400 phr Füllstoff
0-100 phr chemisches Treibmittel
1-50 phr Hilfsstoff
0-30 phr Trocknungsmittel
umfasst.

4. Profildichtung nach einem der vorhergehenden Ansprüche, **dadurch gekennzeichnet, dass** die Elastomerzusammensetzung zusätzlich
1-15 phr chemisches Treibmittel
umfasst.

5. Profildichtung nach einem der vorhergehenden Ansprüche, **dadurch gekennzeichnet, dass** der mittlere Durchmesser der expandierten Mikrokugeln 40-150 µm beträgt.

6. Profidichtung nach einem der vorhergehenden Ansprüche, **dadurch gekennzeichnet, dass** das Elastomer ein EPDM ist.

7. Profildichtung nach einem der vorhergehenden Ansprüche, **dadurch gekennzeichnet, dass** die gesamte Profildichtung aus der Elastomerzusammensetzung besteht oder die Profildichtung aus einem ersten und einem zweiten Teilbereich besteht, wobei der erste Teilbereich aus der Zusammensetzung und der der zweite Teilbereich aus Moosgummi oder einer Moosgummi-Mischung (2) besteht.

8. Profildichtung nach einem der vorhergehenden Ansprüche, **dadurch gekennzeichnet, dass** die Wärmeleitfähigkeit der Elastomerzusammensetzung λ < 0,057 W/(m K) beträgt.

9. Profildichtung nach einem der vorhergehenden Ansprüche, **dadurch gekennzeichnet, dass** die Elastomerzusammensetzung (1) eine Stauchhärte von mindestens 100 kPa bei einer Kompression von 25 %, und/oder eine Stauchhärte von mindestens 200 kPa bei einer Kompression von 40 % und/oder eine Stauchhärte von mindestens 300 kPa bei einer Kompression von 50 % aufweist.

10. Profildichtung nach einem der vorhergehenden Ansprüche, **dadurch gekennzeichnet, dass** die Elastomerzusammensetzung (1) einen Druckverformungsrest von kleiner oder gleich 70 % bei einer Kompression von 25 % für 24 Stunden bei 70 °C und/oder einen Druckverformungsrest von kleiner oder gleich 50 % bei einer Kompression von 25 % für 24 Stunden bei 23 °C und/oder einen Druckverformungsrest von kleiner oder gleich 80 % bei einer Kompression von 25 % für 24 Stunden bei -10 °C aufweist.

11. Profildichtung nach einem der vorhergehenden Ansprüche, umfassend einen Kopfbereich (4) und einen Fußbereich (5),
wobei der Kopfbereich (4) einen Mittelsteg (7) umfasst, welcher dazu ausgebildet ist, einer Scheibe zugewandt zu sein,
wobei der Mittelsteg (7) eine Anlageschulter (6) umfasst, wobei eine Seite der Anlageschulter (6) dazu ausgebildet ist, einer Scheibe zugewandt zu sein und die andere Seite der Anlageschulter (6) dazu ausgebildet ist, einem Rahmen zugewandt zu sein, und
wobei der Fußbereich (5) mindestens einen Haltebereich (8) umfasst, welcher dazu ausgebildet ist, die Profildichtung in dem Rahmen zu fixieren.

12. Profildichtung nach Anspruch 11, **dadurch gekennzeichnet, dass** die Profildichtung mindestens einen Luftkanal (9) umfasst, bevorzugt **dadurch gekennzeichnet, dass** sich mindestens ein Luftkanal (9) im Bereich unterhalb des Mittelstegs (7) befindet.

13. Profildichtung nach Anspruch 12, **dadurch gekennzeichnet, dass** sich mindestens ein Luftkanal (9) innerhalb der Anlageschulter (6) befindet und/oder sich mindesten ein Luftkanal (9) unterhalb der Anlageschulter (6) befindet.

14. Verfahren zur Herstellung einer Profildichtung nach einem der Ansprüche 1-13, umfassend die Schritte, dass eine Werkstoffmischung, umfassend 100 phr Elastomer und 25-40 phr expandierbare Mikrokugeln, auf eine Temperatur von 75 - 300 °C erhitzt und eine Profildichtung geformt wird.

15. Verwendung einer Profildichtung nach einem der Ansprüche 1-13 zur Wärmedämmung, bevorzugt zur Wärmedämmung im Baubereich.

## Claims

1. Profile sealing, in particular for windows and doors, of an elastomer composition (1) comprising: 100 phr of elastomer and 25-40 phr of expanded microspheres, the average diameter of the expanded microspheres 10-200 being and the µm elastomer composition (1) having a density of 0.10-0.30 g/cm³.

2. Profile sealing according to claim 1, **characterized in that** the elastomer composition (1) has a density of 0.12-0.28 g/cm³.

3. Profile sealing according to one of the preceding claims, **characterized in that** the elastomer composition (1) additionally comprises
10-150 phr Softening agent
20-400 phr Filler
0-100 phr Chemical propellant
1-50 phr Excipient
0-30 phr Desiccant.

4. A profile sealing according to any one of the preceding claims, **characterized in that** the elastomer composition additionally comprises 1-15 phr of chemical blowing agent.

5. Profile sealing according to one of the preceding claims, **characterized in that** the average diameter of the expanded microspheres 40-150 is µm.

6. A profile gasket according to any one of the preceding claims, **characterized in that** the elastomer is an EPDM.

7. Profile sealing according to one of the preceding claims, **characterized in that** the entire profile sealing consists of the elastomer composition or the profile sealing consists of a first and a second partial area, wherein the first partial area of the composition and the second partial area consists of sponge rubber or a consists sponge rubber mixture (2).

8. Profile sealing according to one of the preceding claims, **characterized in that** the thermal conductivity of the elastomer composition is λ < 0.057 W/(m K)

9. Profile sealing according to one of the preceding claims, **characterized in that** the elastomer composition (1) has a compression hardness of at least 100 kPa at a compression of 25 %, and/or a compression hardness of at least 200 kPa at a compression of 40 % and/or a compression hardness of at least 300 kPa at a compression of 50 %.

10. The profile sealing according to any one of the preceding claims, **characterized in that** the elastomer composition (1) has a compressive deformation rest of less than or equal to 70% at a compression of for 24 hours at 70°C and/or a compressive deformation rest of less than or equal to 50% at a compression of 25% for 24 hours at 23°C and/or a compressive deformation rest of less than or equal to at a compression of 25% for 24 hours at -10°C.

11. A profile sealing according to any one of the preceding claims, comprising a head portion (4) and a foot portion (5), the head portion (4) comprises a center web (7) adapted to face a pane, the center web (7) comprising a resting shoulder (6), wherein one side of the resting shoulder (6) is designed to face a pane and the other side of the resting shoulder (6) is designed to face a frame, and wherein the base region (5) comprises at least one holding area (8) which is designed to fix the profile sealing in the frame.

12. Profile sealing according to claim 11, **characterized in that** the profile sealing comprises at least one air channel (9), preferably **characterized in that** at least one air channel (9) is in the region below located the central web (7).

13. Profile sealing according to claim 12, **characterized in that** at least one air channel (9) is located inside the resting shoulder (6) and/or at least one air channel (9) is located below the resting shoulder (6).

14. A method for producing a profile sealing according to one of the claims 1-13, comprising the steps of heating a material mixture comprising 100 phr of elastomer and 25-40 phr of expandable microspheres to a temperature of 75-300°C and molding a profile sealing.

15. Use of a profile sealing according to any one of claims 1-13 for thermal insulation, preferably for thermal insulation in construction.

## Revendications

1. Joint d'étanchéité profilé, en particulier pour fenêtres et portes,
constitué d'une composition élastomère (1) contenant :
100 phr d'élastomère et
20 à 40 phr de microsphères expansées,
le diamètre moyen des microsphères expansées étant de 10 à 200 µm et la composition élastomère (1) présentant une densité de 0,10 à 0,30 g/cm³.

2. Joint d'étanchéité profilé selon la revendication 1,
**caractérisé en ce que** la composition élastomère (1) présente une densité de 0,12 à 0,28 g/cm³.

3. Joint d'étanchéité profilé selon l'une des revendications précédentes,
**caractérisé en ce que** la composition élastomère (1) contient en outre
10 à 150 phr de plastifiant
20 à 400 phr de matière de charge
0 à 100 phr d'agent gonflant chimique
1 à 50 phr d'adjuvant
0 à 30 phr d'agent de séchage.

4. Joint d'étanchéité profilé selon l'une des revendications précédentes,
**caractérisé en ce que** la composition élastomère contient en outre 1 à 15 phr d'agent gonflant chimique.

5. Joint d'étanchéité profilé selon l'une des revendications précédentes,
**caractérisé en ce que** le diamètre moyen des microsphères expansées est de 40 à 150 µm.

6. Joint d'étanchéité profilé selon l'une des revendications précédentes,
**caractérisé en ce que** l'élastomère est un EPDM.

7. Joint d'étanchéité profilé selon l'une des revendications précédentes,
**caractérisé en ce que** l'ensemble du joint d'étanchéité profilé est constitué de la composition élastomère ou **en ce que** le joint d'étanchéité profilé est constitué d'une première et d'une deuxième zone partielle, la première zone partielle étant constituée de ladite composition et la deuxième zone partielle étant constituée de caoutchouc mousse ou d'un mélange de caoutchouc mousse (2).

8. Joint d'étanchéité profilé selon l'une des revendications précédentes,
**caractérisé en ce que** la conductivité thermique de la composition élastomère est λ < 0,057 W/(m K).

9. Joint d'étanchéité profilé selon l'une des revendications précédentes,
**caractérisé en ce que** la composition élastomère (1) présente une résistance à l'écrasement d'au moins 100 kPa à une compression de 25 %, et/ou une résistance à l'écrasement d'au moins 200 kPa à une compression de 40 % et/ou une résistance à l'écrasement d'au moins 300 kPa à une compression de 50 %.

10. Joint d'étanchéité profilé selon l'une des revendications précédentes,
**caractérisé en ce que** la composition élastomère (1) présente une déformation rémanente après compression inférieure ou égale à 70 % à une compression de 25 % pendant 24 heures à 70 °C et/ou une déformation rémanente après compression inférieure ou égale à 50 % à une compression de 25 % pendant 24 heures à 23 °C et/ou une déformation rémanente après compression inférieure ou égale à 80 % à une compression de 25 % pendant 24 heures à -10 °C.

11. Joint d'étanchéité profilé selon l'une des revendications précédentes,
comprenant une partie de tête (4) et une partie de pied (5),
sachant que la partie de tête (4) comprend une âme centrale (7) conçue pour faire face à une vitre,
l'âme centrale (7) comprend un épaulement d'appui (6), un côté de l'épaulement d'appui (6) étant conçu pour faire face à une vitre et l'autre côté de l'épaulement d'appui (6) étant conçu pour faire face à un cadre, et
la partie de pied (5) comprend au moins une partie de retenue (8) conçue pour fixer le joint d'étanchéité profilé dans le cadre.

12. Joint d'étanchéité profilé selon la revendication 11,
**caractérisé en ce que** le joint d'étanchéité profilé comprend au moins un canal d'air (9),
de préférence **caractérisé en ce qu'**au moins un canal d'air (9) se trouve dans la zone située en dessous de l'âme centrale (7).

13. Joint d'étanchéité profilé selon la revendication 12,
**caractérisé en ce qu'**au moins un canal d'air (9) se trouve à l'intérieur de l'épaulement d'appui (6) et/ou au moins un canal d'air (9) se trouve en dessous de l'épaulement d'appui (6).

14. Procédé de fabrication d'un joint d'étanchéité profilé selon l'une des revendications 1 à 13, comprenant les étapes consistant à chauffer un mélange de matériaux, contenant 100 phr d'élastomère et 20 à 45 phr de microsphères expansibles, à une température de 75 à 300 °C, et à former un joint d'étanchéité profilé.

15. Utilisation d'un joint d'étanchéité profilé selon l'une des revendications 1 à 13 pour l'isolation thermique, de préférence pour l'isolation thermique dans le domaine de la construction.
